# EUROPEAN PATENT SPECIFICATION

(11) **EP 4 040 417 B1**
(45) Date of publication and mention of the grant of the patent: **01.04.2026**
(21) Application number: 20873120.8
(22) Date of filing: 29.09.2020
(51) Int. Cl.: G01D 9/00, H04Q 9/00

(54) **SENSOR DEVICE AND METHOD EXECUTED BY SENSOR DEVICE**
SENSORVORRICHTUNG UND VON DER SENSORVORRICHTUNG AUSGEFÜHRTES VERFAHREN
DISPOSITIF DE CAPTEUR ET PROCÉDÉ EXÉCUTÉ PAR UN DISPOSITIF DE CAPTEUR

(30) Priority: 02.10.2019 JP 2019182541
(43) Date of publication of application: 10.08.2022
(73) Proprietor: Nabtesco Corporation, Tokyo 102-0093 (JP)
(72) Inventor: ANDOH, Kiyoshi, Tokyo 102-0093 (JP); WADA, Takashi, Kobe-shi Hyogo 650-0022 (JP); INOUE, Hiroyuki, Tokyo 102-0093 (JP)
(74) Representative: Grünecker Patent- und Rechtsanwälte PartG mbB
(86) International application number: PCT/JP2020/036955
(87) International publication number: WO 2021/065925

(56) References cited:
- WO-A1-2010/146726
- WO-A1-2016/068295
- WO-A1-2019/079213
- FR-A1- 3 065 143
- JP-A- 2005 018 175
- JP-A- 2010 148 027
- JP-A- 2012 053 819
- JP-A- 2015 528 894
- JP-A- 2016 194 441
- JP-A- 2017 157 212
- JP-A- 2018 112 971
- JP-A- 2018 509 191
- US-A1- 2008 036 617
- US-A1- 2011 248 846
- US-A1- 2018 287 224

## Description

The present invention relates to a data processing technology and particularly relates to a sensor device, a method executed by the sensor device.

A technology has been proposed for storing characteristic values measured at the time of manufacturing a product in a storage medium provided in the product and performing control based on the stored characteristic values (see, for example, Patent Literature 1). In addition, technologies related to wireless sensors are disclosed in Patent Literatures 2 to 4.
[Patent Literature 1] Japanese Patent Application Publication No. 2000-220508
[Patent Literature 2] WO 2019/079213 A1
[Patent Literature 3] US 2008/0036617 A1
[Patent Literature 4] US 2011/0248846 A1

The technology described in the above Patent Literature 1 is for acquiring the characteristic values of a product by using an inspection device at the time of manufacturing the product and does not allow for the acquisition of the situation during the transportation of the product. Therefore, if the characteristics of the product change from those at the time of manufacture due to transportation condition, it may be difficult to properly control the product.

In this background, one of the purposes of the present invention is to allow for the grasping of a condition related to a product under a situation where no external power source is supplied such as during the transportation of the product.
This is achieved by the features of the independent claims. In the following, the invention is defined by the features of the independent claims. Any reference to inventions or embodiments not falling within the scope of the independent claims are to be interpreted as examples useful for understanding the invention.

A sensor device according to an exemplary embodiment includes: a sensor unit that measures a condition related to an object; a communication unit that outputs information that is based on the measurement result from the sensor unit; a storage unit that stores the measurement result from the sensor unit and the information output from the communication unit; a power storage unit that supplies electric power for operating at least one of the sensor unit, the communication unit, and the storage unit; and a power generation unit that converts energy that exists in an external environment into electric power and charges the power storage unit. The sensor unit, the communication unit, the storage unit, the power storage unit, and the power generation unit are integrally provided, and at least two of the sensor unit, the communication unit, the storage unit, the power storage unit, and the power generation unit are arranged in an overlapping manner.

Another exemplary embodiment also relates to a sensor device. This sensor device includes: a sensor unit that measures a condition related to an object; a communication unit that outputs information that is based on the measurement result from the sensor unit; a processing unit that generates information output from the communication unit based on the measurement result from the sensor unit; a storage unit that stores the measurement result from the sensor unit and the information output from the communication unit; a power storage unit that supplies electric power for operating at least one of the sensor unit, the communication unit, and the storage unit; a power generation unit that converts energy that exists in an external environment into electric power and charges the power storage unit; and a power supply control unit that controls the supply or disconnection of electric power for at least one of the sensor unit, the communication unit, and the storage unit. The storage unit is capable of storing a plurality of measurement results from the sensor unit or a plurality of pieces of information output from the communication unit, the storage unit stores the plurality of measurement results or the plurality of pieces of information in association with a value that changes over time, and the sensor unit has a first sensor group composed of a plurality of sensors that measure different types of physical quantities and a second sensor group composed of a plurality of sensors that are arranged apart from one another and that measure the same type of physical quantity. The processing unit calculates the physical phenomenon inside the object based on the measurement result from the second sensor group and stores the calculation result in the storage unit, and the sensor unit, the communication unit, the processing unit, the storage unit, the power storage unit, the power generation unit, and the power supply control unit are integrally provided, and at least two of the sensor unit, the communication unit, the storage unit, the power storage unit, and the power generation unit are arranged in an overlapping manner.

Still another exemplary embodiment relates to a management system. This management system includes: a sensor device that is attached to a part; a management server that manages information related to the part; and an acceptance inspection device that inspects whether or not the quality of the part meets the standard. The sensor device includes: a sensor unit that measures a condition related to the part; a communication unit that transmits information that is based on the measurement result from the sensor unit to the acceptance inspection device and also receives information transmitted from the acceptance inspection device; a storage unit that stores the measurement result from the sensor unit and the information received by the communication unit; a power storage unit that supplies electric power for operating at least one of the sensor unit, the communication unit, and the storage unit; and a power generation unit that converts energy that exists in an external environment into electric power and charges the power storage unit. The acceptance inspection device transmits the information that is based on the measurement result from the sensor unit of the sensor device received from the sensor device to the management server and also transmits the information received from the management server to the sensor device, and the management server obtains a correction value for the part based on the information that is based on the measurement result from the sensor unit of the sensor device transmitted from the acceptance inspection device and transmits the correction value to the acceptance inspection device.

Still another exemplary embodiment relates to a management server. This management server is a management server that manages information related to a part and includes: a deriving unit that obtains a correction value for the part based on the information related to the part transmitted from an acceptance inspection device that inspects whether or not the quality of the part meets the standard; and a providing unit that transmits the correction value derived by the deriving unit to the acceptance inspection device. The acceptance inspection device transmits the information that is based on the measurement result from the sensor unit of the sensor device received from the sensor device attached to the part to the management server and also transmits the correction value received from the management server to the sensor device, and the sensor device includes: a sensor unit that measures a condition related to the part; a communication unit that transmits information that is based on the measurement result from the sensor unit to the acceptance inspection device and also receives information transmitted from the acceptance inspection device; a storage unit that stores the measurement result from the sensor unit and the information received by the communication unit; a power storage unit that supplies electric power for operating at least one of the sensor unit, the communication unit, and the storage unit; and a power generation unit that converts energy that exists in an external environment into electric power and charges the power storage unit.

Yet another exemplary embodiment relates to an acceptance inspection device. This device is an acceptance inspection device that inspects whether or not the quality of a part meets the standard and includes: a first acquisition unit that acquires information that is based on a measurement result from a sensor unit of a sensor device attached to the part from the sensor device; a second acquisition unit that transmits the information acquired by the first acquisition unit to a management server that manages information related to the part and also acquires a correction value for the part obtained based on the information by the management server from the management server; and an update unit that transmits the correction value acquired by the second acquisition unit to the sensor device. The sensor device includes: a sensor unit that measures a condition related to the part; a communication unit that transmits information that is based on the measurement result from the sensor unit to the acceptance inspection device and also receives information transmitted from the acceptance inspection device; a storage unit that stores the measurement result from the sensor unit and the information received by the communication unit; a power storage unit that supplies electric power for operating at least one of the sensor unit, the communication unit, and the storage unit; and a power generation unit that converts energy that exists in an external environment into electric power and charges the power storage unit.

Still another exemplary embodiment relates to a management system for a speed reducer. This management system for a speed reducer includes: a speed reducer; a management server that manages information related to the speed reducer; and an acceptance inspection device that inspects whether or not the quality of the speed reducer meets the standard. The speed reducer includes: a speed reduction mechanism; a case that houses the speed reduction mechanism; a sensor unit that measures a condition related to the case; a communication unit that transmits information that is based on the measurement result from the sensor unit to the acceptance inspection device and also receives information transmitted from the acceptance inspection device; a storage unit that stores the measurement result from the sensor unit and the information received by the communication unit; a power storage unit that supplies electric power for operating at least one of the sensor unit, the communication unit, and the storage unit; and a power generation unit that converts energy that exists in an external environment into electric power and charges the power storage unit. The acceptance inspection device transmits the information that is based on the measurement result from the sensor unit of the speed reducer received from the speed reducer to the management server and also transmits the information received from the management server to the speed reducer, and the management server obtains a correction value for the speed reducer based on the information that is based on the measurement result from the sensor unit of the speed reducer transmitted from the acceptance inspection device and transmits the correction value to the acceptance inspection device.

Still another exemplary embodiment relates to a management system for a traveling unit for a crawler. This management system for a traveling unit for a crawler includes: a traveling unit for a crawler; a management server that manages information related to the traveling unit for a crawler; and an acceptance inspection device that inspects whether or not the quality of the traveling unit for a crawler meets the standard. The traveling unit for a crawler includes: a traveling control unit that controls the operation of the crawler; a case that houses the traveling control unit; a sensor unit that measures a condition related to the case; a communication unit that transmits information that is based on the measurement result from the sensor unit to the acceptance inspection device and also receives information transmitted from the acceptance inspection device; a storage unit that stores the measurement result from the sensor unit and the information received by the communication unit; a power storage unit that supplies electric power for operating at least one of the sensor unit, the communication unit, and the storage unit; and a power generation unit that converts energy that exists in an external environment into electric power and charges the power storage unit. The acceptance inspection device transmits the information that is based on the measurement result from the sensor unit of the traveling unit for a crawler received from the traveling unit for a crawler to the management server and also transmits the information received from the management server to the traveling unit for a crawler, and the management server obtains a correction value for the traveling unit for a crawler based on the information that is based on the measurement result from the sensor unit of the traveling unit for a crawler transmitted from the acceptance inspection device and transmits the correction value to the acceptance inspection device.

Still another exemplary embodiment relates to a management system for a fluid valve. This management system for a fluid valve includes: a fluid valve; a management server that manages information related to the fluid valve; and an acceptance inspection device that inspects whether or not the quality of the fluid valve meets the standard. The fluid valve includes: a valve unit that controls the flow of fluid; a case that houses the valve unit; a sensor unit that measures a condition related to the case; a communication unit that transmits information that is based on the measurement result from the sensor unit to the acceptance inspection device and also receives information transmitted from the acceptance inspection device; a storage unit that stores the measurement result from the sensor unit and the information received by the communication unit; a power storage unit that supplies electric power for operating at least one of the sensor unit, the communication unit, and the storage unit; and a power generation unit that converts energy that exists in an external environment into electric power and charges the power storage unit. The acceptance inspection device transmits the information that is based on the measurement result from the sensor unit of the fluid valve received from the fluid valve to the management server and also transmits the information received from the management server to the fluid valve, and the management server obtains a correction value for the fluid valve based on the information that is based on the measurement result from the sensor unit of the fluid valve transmitted from the acceptance inspection device and transmits the correction value to the acceptance inspection device.

Still another exemplary embodiment relates to a management system for a fluid cylinder. This management system for a fluid cylinder includes: a fluid cylinder; a management server that manages information related to the fluid cylinder; and an acceptance inspection device that inspects whether or not the quality of the fluid cylinder meets the standard. The fluid cylinder includes: a cylinder unit that houses fluid; a case that houses the cylinder unit; a sensor unit that measures a condition related to the case; a communication unit that transmits information that is based on the measurement result from the sensor unit to the acceptance inspection device and also receives information transmitted from the acceptance inspection device; a storage unit that stores the measurement result from the sensor unit and the information received by the communication unit; a power storage unit that supplies electric power for operating at least one of the sensor unit, the communication unit, and the storage unit; and a power generation unit that converts energy that exists in an external environment into electric power and charges the power storage unit. The acceptance inspection device transmits the information that is based on the measurement result from the sensor unit of the fluid cylinder received from the fluid cylinder to the management server and also transmits the information received from the management server to the fluid cylinder, and the management server obtains a correction value for the fluid cylinder based on the information that is based on the measurement result from the sensor unit of the fluid cylinder transmitted from the acceptance inspection device and transmits the correction value to the acceptance inspection device.

Still another exemplary embodiment relates to a management system for a fluid pump. This management system for a fluid pump includes: a fluid pump; a management server that manages information related to the fluid pump; and an acceptance inspection device that inspects whether or not the quality of the fluid pump meets the standard. The fluid pump includes: a pump unit that controls the flow of fluid; a case that houses the pump unit; a sensor unit that measures a condition related to the case; a communication unit that transmits information that is based on the measurement result from the sensor unit to the acceptance inspection device and also receives information transmitted from the acceptance inspection device; a storage unit that stores the measurement result from the sensor unit and the information received by the communication unit; a power storage unit that supplies electric power for operating at least one of the sensor unit, the communication unit, and the storage unit; and a power generation unit that converts energy that exists in an external environment into electric power and charges the power storage unit. The acceptance inspection device transmits the information that is based on the measurement result from the sensor unit of the fluid pump received from the fluid pump to the management server and also transmits the information received from the management server to the fluid pump, and the management server obtains a correction value for the fluid pump based on the information that is based on the measurement result from the sensor unit of the fluid pump transmitted from the acceptance inspection device and transmits the correction value to the acceptance inspection device.

Still another exemplary embodiment relates to a management system for a fluid compressor. This management system for a fluid compressor includes: a fluid compressor; a management server that manages information related to the fluid compressor; and an acceptance inspection device that inspects whether or not the quality of the fluid compressor meets the standard. The fluid compressor includes: a compression unit that applies pressure to fluid; a case that houses the compression unit; a sensor unit that measures a condition related to the case; a communication unit that transmits information that is based on the measurement result from the sensor unit to the acceptance inspection device and also receives information transmitted from the acceptance inspection device; a storage unit that stores the measurement result from the sensor unit and the information received by the communication unit; a power storage unit that supplies electric power for operating at least one of the sensor unit, the communication unit, and the storage unit; and a power generation unit that converts energy that exists in an external environment into electric power and charges the power storage unit. The acceptance inspection device transmits the information that is based on the measurement result from the sensor unit of the fluid compressor received from the fluid compressor to the management server and also transmits the information received from the management server to the fluid compressor, and the management server obtains a correction value for the fluid compressor based on the information that is based on the measurement result from the sensor unit of the fluid compressor transmitted from the acceptance inspection device and transmits the correction value to the acceptance inspection device.

Still another exemplary embodiment relates to a management system for an electric motor. This management system for an electric motor includes: an electric motor; a management server that manages information related to the electric motor; and an acceptance inspection device that inspects whether or not the quality of the electric motor meets the standard. The electric motor includes: a motor unit that converts electrical energy into mechanical energy; a case that houses the motor unit; a sensor unit that measures a condition related to the case; a communication unit that transmits information that is based on the measurement result from the sensor unit to the acceptance inspection device and also receives information transmitted from the acceptance inspection device; a storage unit that stores the measurement result from the sensor unit and the information received by the communication unit; a power storage unit that supplies electric power for operating at least one of the sensor unit, the communication unit, and the storage unit; and a power generation unit that converts energy that exists in an external environment into electric power and charges the power storage unit. The acceptance inspection device transmits the information that is based on the measurement result from the sensor unit of the electric motor received from the electric motor to the management server and also transmits the information received from the management server to the electric motor, and the management server obtains a correction value for the electric motor based on the information that is based on the measurement result from the sensor unit of the electric motor transmitted from the acceptance inspection device and transmits the correction value to the acceptance inspection device.

Still another exemplary embodiment relates to a management system for an electric actuator. This management system for an electric actuator includes: an electric actuator; a management server that manages information related to the electric actuator; and an acceptance inspection device that inspects whether or not the quality of the electric actuator meets the standard. The electric actuator includes: a drive unit that operates based on electrical energy; a case that houses the drive unit; a sensor unit that measures a condition related to the case; a communication unit that transmits information that is based on the measurement result from the sensor unit to the acceptance inspection device and also receives information transmitted from the acceptance inspection device; a storage unit that stores the measurement result from the sensor unit and the information received by the communication unit; a power storage unit that supplies electric power for operating at least one of the sensor unit, the communication unit, and the storage unit; and a power generation unit that converts energy that exists in an external environment into electric power and charges the power storage unit. The acceptance inspection device transmits the information that is based on the measurement result from the sensor unit of the electric actuator received from the electric actuator to the management server and also transmits the information received from the management server to the electric actuator, and the management server obtains a correction value for the electric actuator based on the information that is based on the measurement result from the sensor unit of the electric actuator transmitted from the acceptance inspection device and transmits the correction value to the acceptance inspection device.

Still another exemplary embodiment relates to a method. This method performed by a sensor device includes: detecting performed by measuring a condition related to an object; outputting information that is based on the measurement result in the detecting; storing the measurement result and the information in a storage unit; supplying electric power from a power storage unit as electric power for executing at least one of the respective processes of the detecting, the outputting, and the storing; and converting energy that exists in an external environment into electric power and charging the power storage unit.

Still another exemplary embodiment relates to a nomenclature plate. This nomenclature plate that is attached to an article and on which information related to the article is displayed includes: a sensor unit that measures a condition related to the article; a communication unit that outputs information that is based on the measurement result from the sensor unit; a storage unit that stores the measurement result from the sensor unit and the information output from the communication unit; a power storage unit that supplies electric power for operating at least one of the sensor unit, the communication unit, and the storage unit; and a power generation unit that converts energy that exists in an external environment into electric power and charges the power storage unit.

Optional combinations of the aforementioned constituting elements, and implementations of the invention in the form of apparatuses, systems, methods, computer programs, and recording media storing computer programs may also be practiced as additional modes of the present invention.

Embodiments will now be described, by way of example only, with reference to the accompanying drawings that are meant to be exemplary, not limiting, and wherein like elements are numbered alike in several figures, in which:
FIG. 1 is a block diagram showing functional blocks of a sensor device according to an exemplary embodiment;
FIG. 2 shows a circuit configuration example of the sensor device according to FIG. 1;
FIG. 3 is a diagram showing the configuration of a sensor system including the sensor device according to FIG. 1;
FIG. 4 is a flowchart showing an example of a sensing process performed by the sensor device;
FIG. 5 is a flowchart showing another example of a sensing process performed by the sensor device;
FIG. 6 is a flowchart showing an example of an information output process performed by the sensor device;
FIG. 7 is a flowchart showing another example of an information output process performed by the sensor device;
FIG. 8 is a flowchart showing another example of an information output process performed by the sensor device;
FIG. 9 is a flowchart showing an example of an initialization process performed by the sensor device;
FIG. 10A is a diagram showing a first attachment example of the sensor device to a speed reducer;
FIG. 10B is a diagram showing the first attachment example of the sensor device to the speed reducer;
FIG. 10C is a diagram showing an example of functional blocks of the sensor device of FIG. 10A and FIG. 10B;
FIG. 11A is a diagram showing the first attachment example of the sensor device to the speed reducer;
FIG. 11B is a diagram showing the first attachment example of the sensor device to the speed reducer;
FIG. 11C is a diagram showing an example of the functional blocks of the sensor device of FIG. 11A and FIG. 11B;
FIG. 12 is a diagram showing another example of the functional blocks of the sensor device of FIG. 10A and FIG.10B;
FIG. 13 is a diagram showing another example of the functional blocks of the sensor device of FIG. 10A and FIG. 10B;
FIG. 14 is a diagram showing another example of the functional blocks of the sensor device of FIG. 10A and FIG. 10B;
FIG. 15 is a diagram showing another example of the functional blocks of the sensor device of FIG. 10A and FIG. 10B;
FIG. 16 is a diagram showing another example of the functional blocks of the sensor device of FIG. 11A and FIG. 11B;
FIG. 17A is a diagram showing an attachment example of the sensor device to a traveling unit for a crawler;
FIG. 17B is a diagram showing an attachment example of the sensor device to the traveling unit for a crawler;
FIG. 17C is a diagram showing an example of functional blocks of the sensor device of FIG. 17A and FIG. 17B;
FIG. 18A is a diagram showing an attachment example of the sensor device to a hydraulic valve;
FIG. 18B is a diagram showing an attachment example of the sensor device to the hydraulic valve;
FIG. 18C is a diagram showing an example of functional blocks of the sensor device of FIG. 18A and FIG. 18B;
FIG. 19A is a diagram showing an attachment example of the sensor device to a pneumatic cylinder;
FIG. 19B is a diagram showing an attachment example of the sensor device to the pneumatic cylinder;
FIG. 19C is a diagram showing an example of functional blocks of the sensor device of FIG. 19A and FIG. 19B;
FIG. 20 is a diagram showing an example of cooperation between a plurality of sensor devices;
FIG. 21 is a diagram showing an example of cooperation between the plurality of sensor devices;
FIG. 22 is a diagram showing the configuration of a sensor system according to an exemplary variation;
FIG. 23 is a block diagram showing functional blocks of a sensor device according to the second exemplary embodiment;
FIG. 24 is a diagram showing the configuration of a management system including the sensor system according to FIG. 23;
FIG. 25 is a diagram showing a distribution process of parts;
FIG. 26 is a flowchart showing an example of the process of a sensor device at the time of acceptance inspection of the parts;
FIG. 27 is a flowchart showing an example of the process of the sensor device at the time of acceptance inspection of the parts;
FIG. 28 is a flowchart showing an exemplary variation of the process of the sensor device at the time of acceptance inspection of the parts; and
FIG. 29 is a diagram showing the configuration of a management system according to the exemplary variation.

The invention will now be described by reference to the preferred embodiments. This does not intend to limit the scope of the present invention, but to exemplify the invention.

### <First Exemplary Embodiment>

Japanese Patent Application Publication No. 2018-096451 suggests a technology for monitoring the state of a machine component by providing a sensor inside the machine component and transmitting the output of the sensor to an electric circuit outside the machine component by wire communication. The technology described in the above publication requires a place to arrange the sensor inside the mechanical component and further requires wiring for supplying power to the sensor. Therefore, the cost and period of time required for the manufacturing of the mechanical component may increase.

Therefore, in an exemplary embodiment, a nomenclature plate attached to the surface of a mechanical component (parts and the like) is used as a sensor device. The sensor device in the exemplary embodiment, in other words, the nomenclature plate attached to the machine component detects a condition related to the machine component before the actual use during the transportation or storage of the machine component, in other words, after the manufacturing of the machine component by using power generated by the sensor device itself. Then, information based on the detection result is output to the outside.

More specifically, the sensor device in the exemplary embodiment includes (1) a sensor unit that measures (can be said to detect) the condition of an attached mechanical component and the condition of the surrounding environment of the mechanical component, (2) an output unit that outputs information based on a measurement result (can be said to be a detection result) from the sensor unit, and (3) an energy harvesting unit that self-generates electricity for operating the sensor unit and the output unit using Wi-Fi (registered trademark) radio waves, etc. This eliminates the need to secure a location for the sensor to be placed inside the mechanical component and to provide new wiring for supplying electric power to the sensor. In other words, while making it possible to grasp the condition related to machine component, it is possible to suppress an increase in the cost and period of time required for manufacturing the machine component.

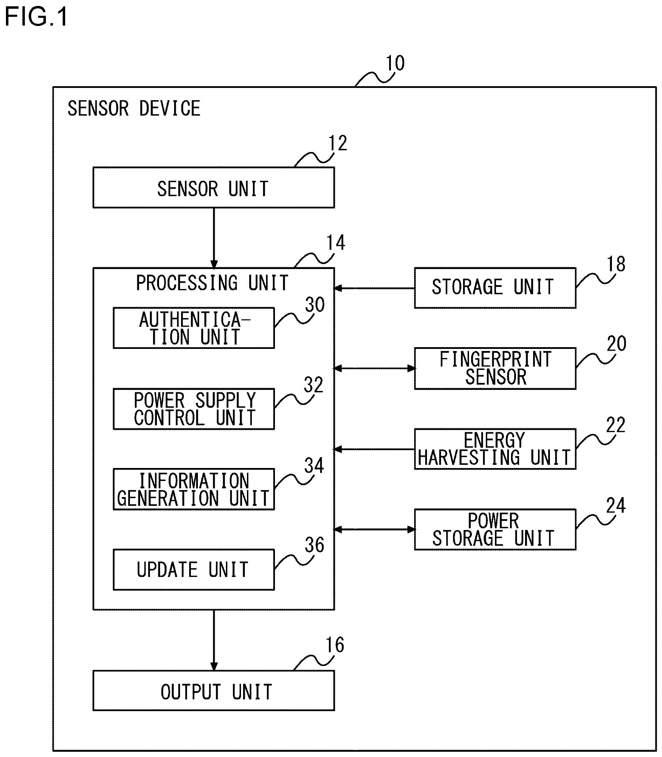

FIG. 1 is a block diagram showing functional blocks of a sensor device 10 according to an exemplary embodiment. The figure shows an example of functional blocks included in the sensor device 10 according to the exemplary embodiment. Each block shown in the block diagrams of the present specification is implemented in hardware such as elements, electronic circuits, or mechanical devices such as a processor, a CPU, and a memory of a computer, and in software such as a computer program. The figure depicts functional blocks implemented by the cooperation of the hardware and the software. Thus, a person skilled in the art should appreciate that there are many ways of accomplishing these functional blocks in various forms in accordance with the components of hardware, software, or the combination of both.

The sensor device 10 is attached to the surface of an article (hereinafter, also referred to as an "object") having a predetermined physical structure as a nomenclature plate. The sensor device 10 includes a sensor unit 12, a processing unit 14, an output unit 16, a storage unit 18, a fingerprint sensor 20, an energy harvesting unit 22, and a power storage unit 24. The sensor device 10 displays information regarding the object on the surface (outer surface) thereof as a nomenclature plate. Further, in the sensor device 10, members corresponding to the functional blocks shown in FIG. 1 are integrally provided in a sheet shape. The sheet shape means that the length of the sensor device 10 in the thickness direction is shorter than the length in the vertical direction and the length in the horizontal direction of the sensor device 10. For example, when the length in the vertical direction and the length in the horizontal direction of the sensor device 10 are several centimeters, the length in the thickness direction of the sensor device 10 is 4 mm or less. Further, the length of the sensor device 10 in the thickness direction is desirably 1 mm or less. The length of the sensor device 10 in the thickness direction is more desirably 0.5 mm or less. Since the sensor device is attached to the surface of the object as a nomenclature plate, having a thin thickness is more desirable since the amount of protrusion from the object becomes small. The housing of the sensor device 10 may be formed of a material having high flexibility (plasticity) or may be formed of a material having low flexibility (plasticity).

The sensor unit 12 is provided so as to come into contact with (including being in proximity) to the object and measures the condition related to the object to which the sensor device 10 is attached. The object may be various types of electronic devices, electrical devices, mechanical devices, parts or finished products. The sensor unit 12 outputs a signal (hereinafter, also referred to as "detection signal") based on the measurement result (detection result) to the processing unit 14.

The condition related to the object measured by the sensor unit 12 is either one or both of the state of the object itself (the state of either the inside or the surface of the object or both) and the state of the surroundings of the object (in other words, the environment surrounding the object). Further, the condition related to the object may be one type of physical state or physical quantity or may be a combination of a plurality of types of physical states or physical quantities. For example, the condition related to the object may be any one of vibration (in other words, 3-axis acceleration), temperature, humidity, sound, ultrasonic waves, distortion, atmospheric pressure, illuminance, global positioning system (GPS) (for example, position data measured using GPS), Bluetooth low energy (BLE) ("Bluetooth" is a registered trademark) beacon (e.g., position data measured using a BLE beacon), submersion degree, and wind power or any combination of these. Furthermore, the condition related to the object may include a chemical state. The chemical state may be, for example, the presence or absence of certain chemicals such as odor, acidity, neutrality, alkalinity, or allergens.

The processing unit 14 generates information (hereinafter, also referred to as "output information") output from the output unit 16 based on a detection signal output from the sensor unit in the exemplary embodiment, which is the measurement result from the sensor unit 12. The processing unit 14 may execute a predetermined arithmetic operation (for example, various filter processes, abnormality diagnosis processes by an artificial intelligence function, etc.) based on the detection signal output from the sensor unit 12 and generate output information including the arithmetic operation result. This allows the data amount of the output information to be reduced.

The output unit 16 outputs the output information generated by the processing unit 14 to the outside in the exemplary embodiment, which is information based on the measurement result from the sensor unit 12. The storage unit 18 stores the measurement result from the sensor unit 12 (detection signal in the exemplary embodiment) or the information output from the output unit 16 (output information in the exemplary embodiment). In the exemplary embodiment, the storage unit 18 stores the output information generated by the processing unit 14 and further stores fingerprint data of an operator who is authorized to operate the sensor device 10 (in other words, an operator who has the authority to operate the sensor device 10).

The storage unit 18 may have storage capacity capable of storing a plurality of measurement results from the sensor unit 12 (for example, a plurality of detection signals output from the sensor unit 12) or a plurality of pieces of output information. The storage unit 18 may store the plurality of measurement results or the plurality of pieces of output information in association with a value that changes over time. The value that changes over time can be considered as a value that changes over the passage of time and may be a counter value or a time value that is counted up or countered down over time. This allows the plurality of measurement results or the plurality of pieces of output information to be held in chronological order.

For example, the processing unit 14 may store a plurality of pieces of output information generated based on the plurality of measurement results from the sensor unit 12 in the storage unit 18 in correspondence with a time value output from a real-time clock (or a GPS device). The processing unit 14 may aggregate or totalize the plurality of pieces of output information stored in the storage unit 18 based on the time value and generate new output information based on the aggregation result or the totalization result. In this case, the output unit 16 may output the new output information to the outside along with individual output information based on an individual measurement result or in place of the individual output information.

When the sensor unit 12 includes a plurality of sensors, the storage unit 18 may hold a detection signal from each sensor (or output information based on each detection signal) in association with each other based on the counter value, the time value, or the like. Alternatively, the storage unit 18 may separately hold the detection signal from each sensor (or output information based on each detection signal).

Further, the storage unit 18 may store the identification information (identification number) of the sensor unit 12 in correspondence with the detection signal or the output information. When the sensor unit 12 includes a plurality of sensors, the storage unit 18 may store a detection signal from each sensor or output information based on the signal in correspondence with the identification information of the sensor. Further, the storage unit 18 may further store the identification information (may be a product type) of the object. Further, the storage unit 18 may be provided independently of the processing unit 14 or may be configured to be removable from the sensor device 10.

The output unit 16 may include electronic paper or a liquid crystal display as a display unit, and the output information generated by the processing unit 14 may be displayed on the electronic paper or the liquid crystal display. When the output unit 16 is formed using electronic paper or a liquid crystal display, the output unit 16 preferably includes a touch panel. In this case, in normal times, the output unit 16 may display information to be displayed on a nomenclature plate (which can also be called default information and includes, for example, product name and manufacturer information). On the other hand, when a predetermined operation is input via the touch panel, the output unit 16 (processing unit 14) may update screen display content so as to display the detection result from the sensor unit 12 and the output information stored in the storage unit 18.

Further, the output unit 16 may include an antenna as a communication unit. In this case, the output unit 16 may transmit the output information generated by the processing unit 14 to an external device by using Wi-Fi, BLE, NFC, or the like.

The fingerprint sensor 20 is a sensor that reads a fingerprint from a finger of the operator of the sensor device 10. The fingerprint sensor 20 may be integrated with the output unit 16 that includes electronic paper or a liquid crystal display.

The energy harvesting unit 22 converts energy existing in the environment (external environment) around the sensor device 10 into electric power (so-called energy harvesting) and supplies the electric power (the generated electric power) as the electric power for operating at least one of the sensor unit 12 and the output unit 16 (each unit in FIG. 1 in the exemplary embodiment). For example, the sensor unit 12, the processing unit 14, the output unit 16, the storage unit 18, and the fingerprint sensor 20 in FIG. 1 operate based on the electric power supplied from the energy harvesting unit 22. The energy harvesting unit 22 may generate electric power based on at least one of energy:
temperature; humidity; radio waves such as Wi-Fi;
electromagnetic waves from the surroundings of the sensor device 10 (including radiation and cosmic rays and also includes electromagnetic noise emitted from an electric motor or the like); vibration; sound (including ultrasonic waves);
light (including visible light, infrared light, and
ultraviolet light); and flow of fluid or powder (wind, wave, etc.).

For example, the energy harvesting unit 22 may convert Wi-Fi radio waves into direct current by using the technology described in "http://gigazine.net/news/20190129-wifi-rectenna/", "http://news.mit.edu/2019/converting-wi-fi-signals-electricity-0128", or the like. Further, the energy harvesting unit 22 may supply electric power to each unit based on electromotive force generated by short-range wireless communication (NFC or the like). The energy harvesting unit 22 that includes such a communication function may execute data communication and power generation in a time-division manner, in other words, may execute data communication and power generation alternately.

The power storage unit 24 stores the electricity generated by the energy harvesting unit 22 and supplies the stored electric power to each unit in FIG. 1.

For example, the sensor unit 12, the processing unit 14, the output unit 16, the storage unit 18, and the fingerprint sensor 20 in FIG. 1 can operate based on the electric power supplied from the energy harvesting unit 22 and can further operate using the electric power supplied from the power storage unit 24. The power storage unit 24 may be a capacitor (including an electric double layer capacitor) or a secondary battery (for example, a lithium ion battery, a solid lithium ion battery, an air battery, etc.).

The processing unit 14 includes an authentication unit 30, a power supply control unit 32, an information generation unit 34, and an update unit 36. When the fingerprint data of an operator read by the fingerprint sensor 20 matches the fingerprint data of an authorized operator stored in advance in the storage unit 18, the authentication unit 30 determines that the authentication of the operator has been successful. When the processing unit 14 determines that the authentication unit 30 has succeeded in authenticating the operator, the processing unit 14 causes output information to be output from the output unit 16 in accordance with operation by the operator.

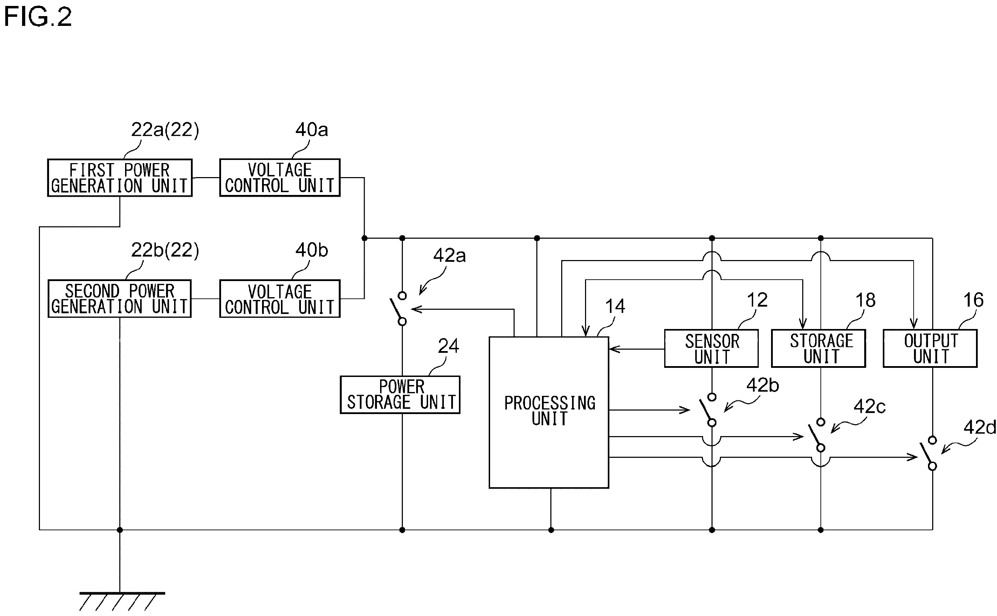

The power supply control unit 32 controls the supply or disconnection of electric power for each unit in FIG. 1. FIG. 2 shows a circuit configuration example of the sensor device according to FIG. 1. In the example in the figure, the energy harvesting unit 22 includes a first power generation unit 22a and a second power generation unit 22b as a plurality of power generation means. For example, the first power generation unit 22a may be a power generation means using a thermoelectric conversion element, and the second power generation unit 22b may be a power generation means using a photovoltaic cell. A voltage control unit 40a controls voltage supplied from the first power generation unit 22a, and a voltage control unit 40b controls voltage supplied from the second power generation unit 22b. For example, the voltage control unit 40a and the voltage control unit 40b transform voltage supplied from each power generation unit to a level within a predetermined range.

The sensor device 10 includes a plurality of switches for controlling the supply or disconnection of electric power for each unit in FIG. 1. These switches may be semiconductor switches or mechanical relays. Further, these switches are electrically connected to the processing unit 14. The power supply control unit 32 of the processing unit 14 switches a switch 42a on when electricity generated by the first power generation unit 22a and electricity generated by the second power generation unit 22b are stored in the power storage unit 24. Further, the power supply control unit 32 switches the switch 42a on when supplying electric power from the power storage unit 24 to the sensor unit 12, the storage unit 18, and the output unit 16.

The power supply control unit 32 of the processing unit 14 switches a switch 42b on when supplying electric power to the sensor unit 12, while the power supply control unit 32 switches the switch 42b off when disconnecting the power supply to the sensor unit 12. Further, the power supply control unit 32 switches a switch 42c on when supplying electric power to the storage unit 18, while the power supply control unit 32 switches the switch 42c off when disconnecting the power supply to the storage unit 18. Further, the power supply control unit 32 switches a switch 42d on when supplying electric power to the output unit 16, while the power supply control unit 32 switches the switch 42d off when disconnecting the power supply to the output unit 16.

Referring back to FIG. 1, the information generation unit 34 generates output information output from the output unit 16 based on the detection signal output from the sensor unit 12. As described above, the information generation unit 34 may execute an arithmetic operation such as various filter processes and abnormality diagnosis processes by an artificial intelligence function based on the detection signal and generate output information including the arithmetic operation result. Further, the information generation unit 34 may aggregate or totalize the plurality of detection signals or the plurality of pieces of output information stored in the storage unit 18 so as to generate new output information.

The update unit 36 updates the data stored in the storage unit 18. For example, the update unit 36 stores the detection signal output from the sensor unit 12 or the output information generated by the information generation unit 34 in the storage unit 18. Further, when a predetermined instruction for instructing the initialization of the storage unit 18 is input, the update unit 36 deletes (in other words, initializes) the data stored in the storage unit 18. When the output unit 16 has a communication function, the above-mentioned predetermined instruction may be input from an external device via communication. Further, when the output unit 16 has a touch panel function, the predetermined instruction may be input through operation by the operator on the touch panel.

The processing unit 14 is a processor (for example, a micro control unit (MCU) or the like) whose arithmetic capacity increases as the number of operation clocks increases and may be realized by a processor capable of changing the number of operation clocks according to the processing details. In this case, a computer program in which a plurality of modules corresponding to the plurality of functional blocks in the processing unit 14 of FIG. 1 are mounted may be stored in a storage area such as the storage unit 18. Then, the function of each functional block may be exerted by the processor reading and executing the computer program. Further, the processor may execute a process for which low arithmetic capacity is sufficient (for example, the process of the power supply control unit 32) at a relatively low operation clock frequency and execute a process requiring high arithmetic capacity (for example, the process of the information generation unit 34) at a relatively high operation clock frequency. The high and low of the operation clock frequency of the processor may be specified by a computer program corresponding to each functional block.

As another aspect, the processing unit 14 may be realized by a processor having a plurality of cores with different power consumption per unit time. When the power supply from the energy harvesting unit 22 and the power storage unit 24 is less than a predetermined threshold value, the processing unit 14 may execute a data process (the process of each functional block) using a core with relatively low power consumption. On the other hand, when the power supply from the energy harvesting unit 22 and the power storage unit 24 is equal to or higher than the above threshold value, the processing unit 14 may execute the data process (the process of each functional block) using a core with relatively large power consumption. Thereby, the electric power supplied from the energy harvesting unit 22 and the power storage unit 24 can be efficiently used.

In the sensor device 10, at least two of the sensor unit 12, the output unit 16, and the energy harvesting unit 22 are arranged in an overlapping manner. Thereby, the size of the sensor device 10 can be reduced, allowing for easy attachment of the sensor device 10 to an object. For example, when the output unit 16 is electronic paper, it is necessary to secure an area of a certain size (information display area) in the vertical direction and the horizontal direction as an area for the output unit 16. In this case, the sensor unit 12 and the energy harvesting unit 22 may be arranged at a position directly below the output unit 16 in the thickness direction.

The processing unit 14, the storage unit 18, the fingerprint sensor 20, and the power storage unit 24 in FIG. 1 are not essential components. For example, when the measurement result from the sensor unit 12 is output from the output unit 16 without processing the measurement result, the processing unit 14 may be omitted. Further, when the measurement result from the sensor unit 12 is immediately output from the output unit 16, the storage unit 18 may be omitted. Further, if the authentication of the operator is not necessary, the fingerprint sensor 20 and the authentication unit 30 of the processing unit 14 may be omitted. Further, if the storage of electricity generated by the energy harvesting unit 22 is not necessary, the power storage unit 24 may be omitted.

A typical example of the sensor device 10 will be described. The sensor unit 12 may include a plurality of sensors that measure a plurality of types of physical quantities (for example, temperature, humidity, and vibration) of an object or the surroundings of the object. The output unit 16 may output output information that is based on the measurement result from the sensor unit 12 to the outside by wireless communication such as Wi-Fi or NFC. The energy harvesting unit 22 may generate electric power based on Wi-Fi radio waves, NFC radio waves, or light (sunlight or illumination light) so as to supply electric power to at least one of the sensor unit 12 and the output unit 16.

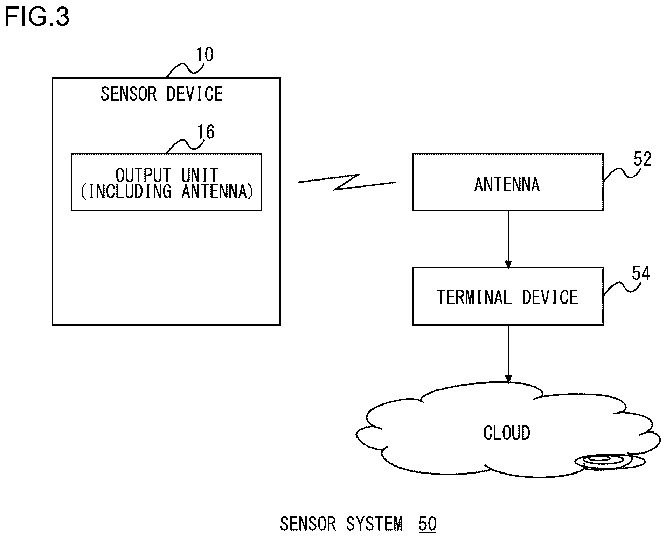

FIG. 3 shows the configuration of a sensor system 50 including the sensor device 10 according to FIG. 1. The sensor system 50 is an information processing system including the sensor device 10 and a terminal device 54. The terminal device 54 may be any of a smartphone, a PC, a drone, and a stationary gate that reads the sensor device 10. The sensor device 10 includes an antenna (in other words, a communication unit) as the output unit 16 and transmits output information to the terminal device 54. The terminal device 54 acquires the output information transmitted from the sensor device 10 via an antenna 52. The terminal device 54 may acquire the output information from a plurality of sensor devices 10 attached to a plurality of objects, associate each piece of output information with the output source sensor device 10, and store the output information in a cloud (database on the cloud, etc.).

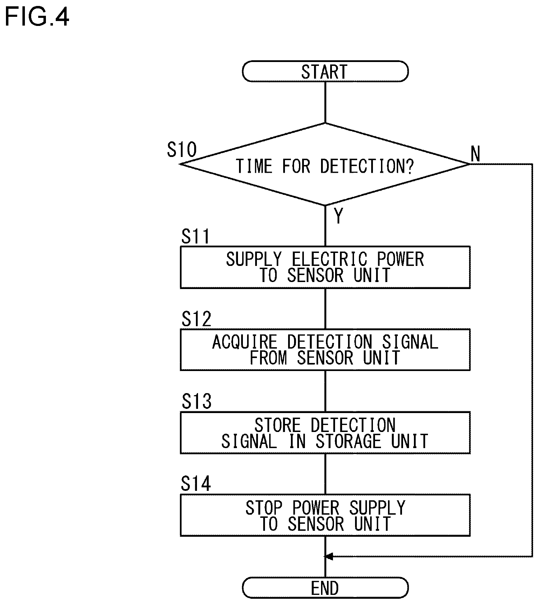

The operation of a sensor device 10 according to the above configuration will be described. FIG. 4 is a flowchart showing an example of a sensing process performed by the sensor device 10. When the time for detecting the condition related to the object is reached (Y in S10), the power supply control unit 32 of the processing unit 14 supplies electric power to the sensor unit 12 (S11). The processing unit 14 acquires a detection signal output from the sensor unit 12 (S12). The update unit 36 of the processing unit 14 stores the detection signal in the storage unit 18 (S13). The power supply control unit 32 of the processing unit 14 stops the power supply to the sensor unit 12 (S14). If it is not the time for detecting the condition related to the object (N in S10), processes in and after S11 are skipped. The sensor device 10 repeatedly executes the sensing process in the present figure. The processing unit 14 may repeatedly execute the processes in and after S11 without performing a determination process in S10.

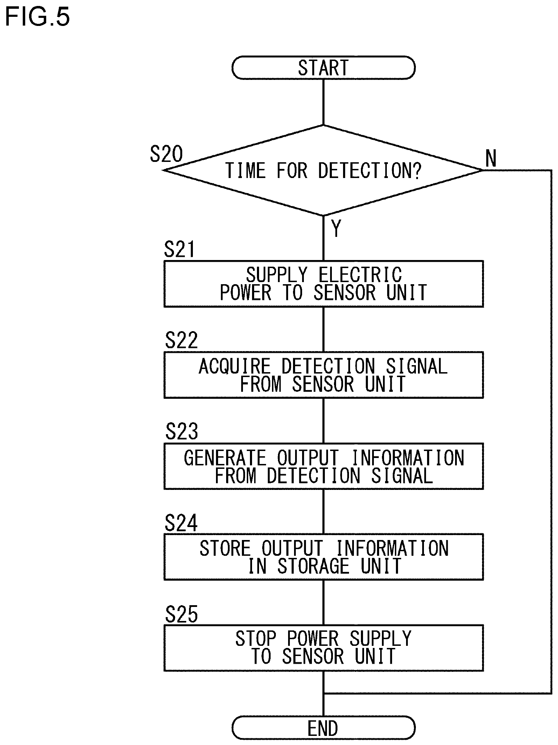

FIG. 5 is a flowchart showing another example of the sensing process performed by the sensor device 10. When the time for detecting the condition related to the object is reached (Y in S20), the power supply control unit 32 of the processing unit 14 supplies electric power to the sensor unit 12 (S21). The processing unit 14 acquires a detection signal output from the sensor unit 12 (S22). The information generation unit 34 of the processing unit 14 executes a filter process or the like on the detection signal so as to generate output information (S23). The update unit 36 of the processing unit 14 stores the output signal in the storage unit 18 (S24). The power supply control unit 32 of the processing unit 14 stops the power supply to the sensor unit 12 (S25). If it is not the time for detecting the condition related to the object (N in S20), processes in and after S21 are skipped. The sensor device 10 repeatedly executes the sensing process in the present figure. The processes in and after S21 may be repeatedly executed without performing a determination process in S20.

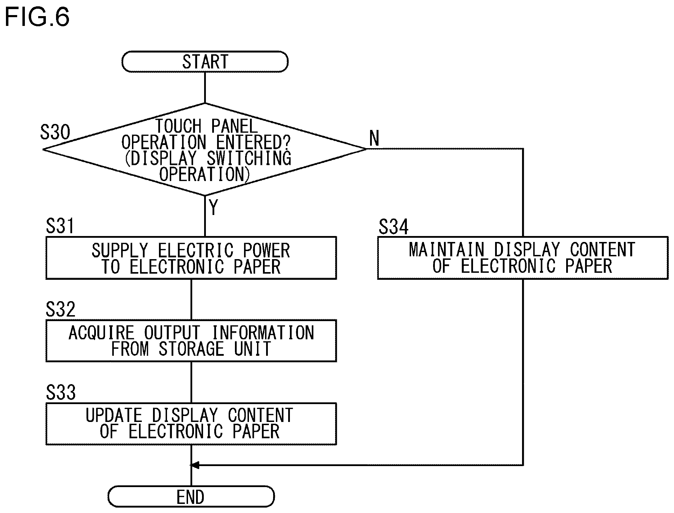

FIG. 6 is a flowchart showing an example of an information output process performed by the sensor device 10. The figure shows a process of updating the display content of electronic paper serving as the output unit 16. It is assumed that the electronic paper in this case requires power supply in order to update the display content but does not require power supply in order to maintain the display content. The electronic paper may display default information such as a product name and a manufacturer name in normal times.

When a predetermined operation for instructing display switching is input to the touch panel integrated with the output unit 16 (Y in S30), the power supply control unit 32 of the processing unit 14 supplies electric power to the electronic paper (S31). The processing unit 14 acquires the output information stored in the storage unit 18 and passes the output information to the output unit 16 (S32). The output unit 16 updates the display content of the electronic paper by applying a voltage to the electronic paper so as to display the output information passed from the processing unit 14 (S33). If an operation for instructing display switching to the touch panel has not been input (N in S30), the output unit 16 maintains the display content of the electronic paper without changing the display content (S34).

The trigger for update of the display content of the electronic paper is not limited to an operation on the touch panel. For example, the display content of the electronic paper may be updated when the electric power is supplied from the energy harvesting unit 22 by NFC or the like. Further, the display content of the electronic paper may be updated when a display update instruction from an external device is received via communication.

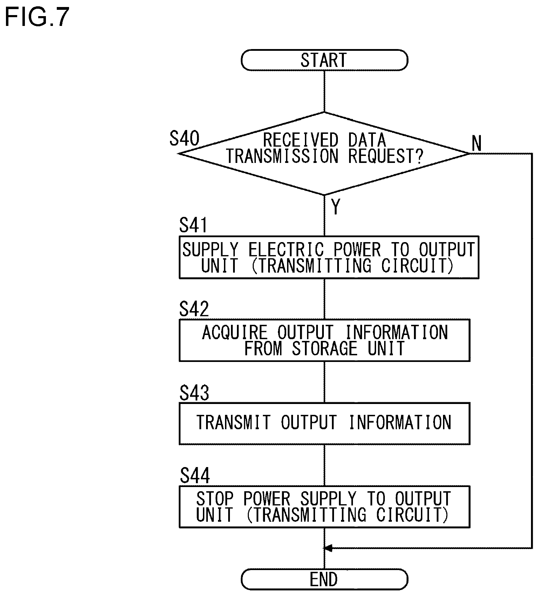

FIG. 7 is a flowchart showing another example of an information output process performed by the sensor device 10. In this case, it is assumed that the output unit 16 has an NFC function and includes a receiving circuit (including a power generation function) and a transmitting circuit. The receiving circuit of the output unit 16 functions as the energy harvesting unit 22. Specifically, upon receiving a data transmission request transmitted from an external device (Y in S40), the receiving circuit supplies electric power to the processing unit 14 based on the electromotive force generated by the communication. The power supply control unit 32 of the processing unit 14 supplies electric power to the transmitting circuit of the output unit 16 (S41). The processing unit 14 acquires the output information stored in the storage unit 18 and passes the output information to the transmitting circuit of the output unit 16 (S42). The transmitting circuit transmits the output information to the request source external device (S43). The power supply control unit 32 of the processing unit 14 stops the power supply to the transmitting circuit of the output unit 16 (S44). If the data transmission request has not been received (N in S40), processes in and after S41 are skipped. The processes in and after S41 may be executed without performing a determination process in S40.

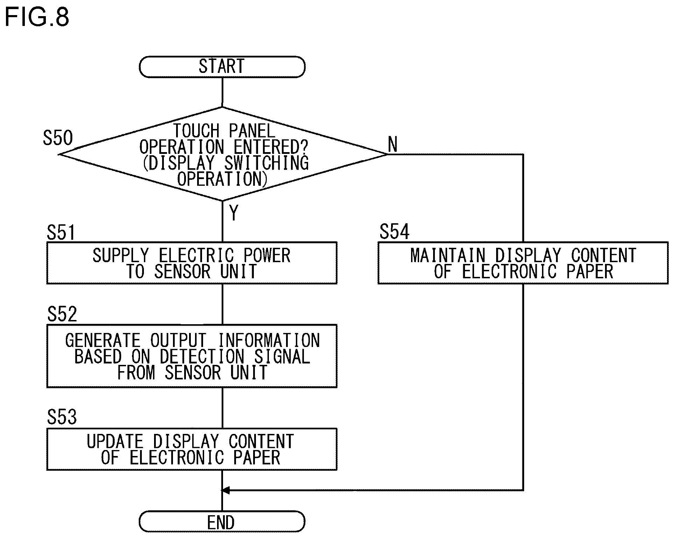

FIG. 8 is a flowchart showing another example of an information output process performed by the sensor device 10. This figure corresponds to FIG. 6. However, the sensor device 10 in the figure does not include a storage unit 18 for storing detection signals or output information. When a predetermined operation for instructing display switching is input to the touch panel integrated with the output unit 16 (Y in S50), the power supply control unit 32 of the processing unit 14 supplies electric power to the sensor unit 12 (S51). According to the details of the operation input to the touch panel, the information generation unit 34 of the processing unit 14 acquires a detection signal from the sensor unit 12 and generates output information based on the detection signal (S52). The output unit 16 updates the display content of the electronic paper by applying a voltage to the electronic paper so as to display the output information generated by the processing unit 14 (S53). If an operation for instructing display switching to the touch panel has not been input (N in S50), the output unit 16 maintains the display content of the electronic paper without changing the display content (S54).

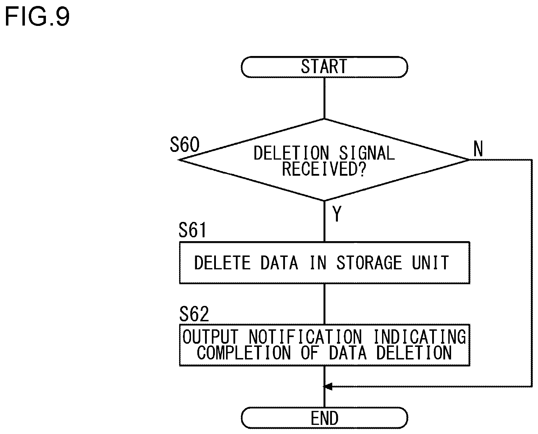

FIG. 9 is a flowchart showing an example of an initialization process performed by the sensor device 10. When an initialization instruction (in other words, a signal instructing the deletion of storage data) is input via communication, or when an initialization instruction is input via an operation by an operator (Y in S60), the update unit 36 of the processing unit 14 initializes the storage unit 18 by deleting data stored in the storage unit 18 (S61). When the data deletion is completed, the update unit 36 passes a notification to the output unit 16 indicating that the data deletion (that is, initialization) is completed. The output unit 16 transmits the notification to the request source external device via communication or displays the notification on a display unit such as electronic paper (S62). If the initialization instruction has not been input (N in S60), processes in and after S61 are skipped.

A attachment example of a sensor device 10 to various articles will be described. In a sensor device 10 in each of the following examples, a sensor unit 12, an output unit 16, and an energy harvesting unit 22 are integrally provided in a sheet shape as described above. Further, at least two of the sensor unit 12, the output unit 16, and the energy harvesting unit 22 are arranged in an overlapping manner.

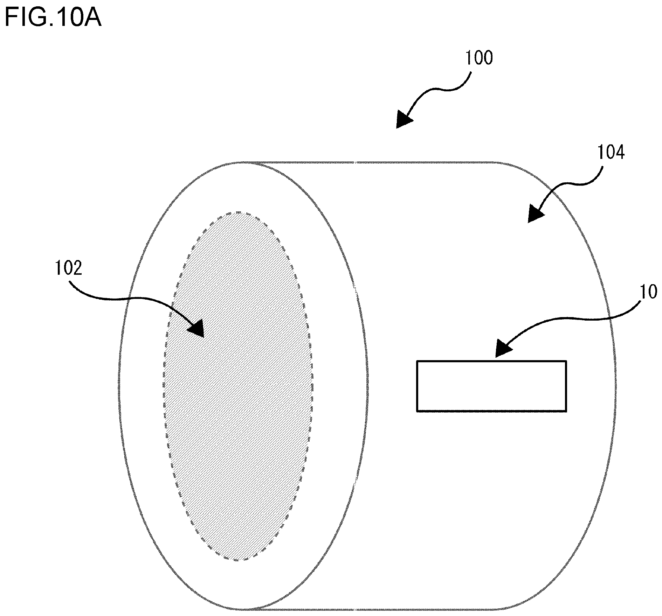

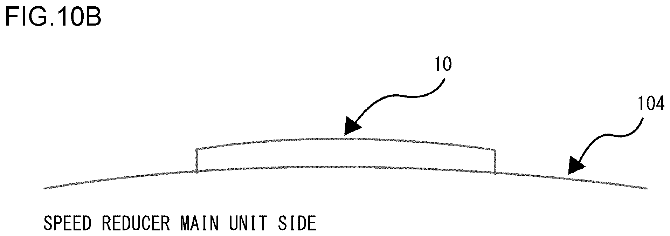

FIG. 10A and FIG. 10B show a first attachment example of a sensor device 10 to a speed reducer 100. As shown in FIG. 10A, the speed reducer 100 includes a speed reduction mechanism 102, a casing 104 for housing the speed reduction mechanism 102, and a sensor device 10. As shown in FIG. 10B, the sensor device 10 is attached so as to adhere to the surface of the casing 104.

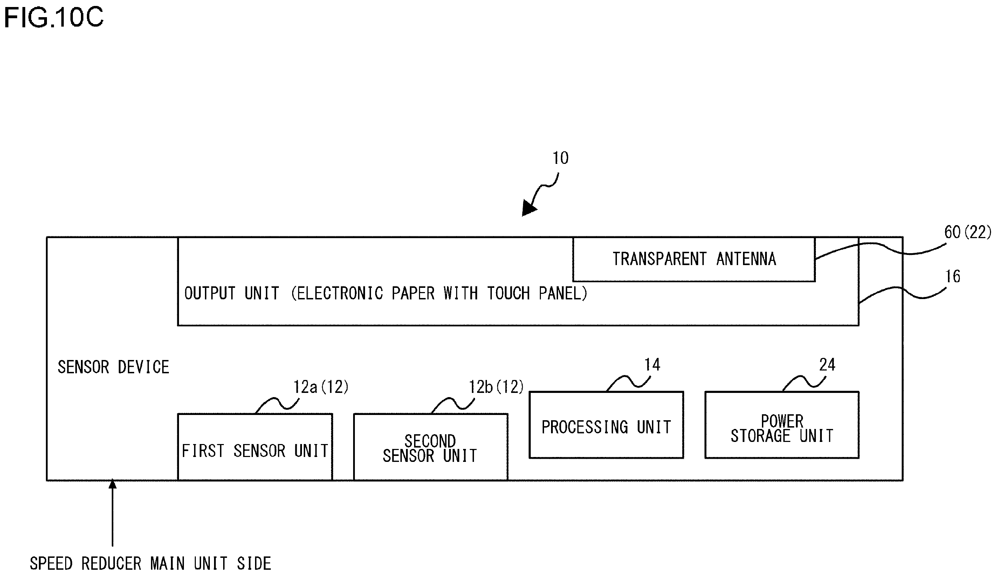

FIG. 10C shows an example of functional blocks of the sensor device 10 of FIG. 10A and FIG. 10B. The sensor device 10 includes a first sensor 12a and a second sensor 12b as a plurality of sensors. The first sensor 12a and the second sensor 12b are sensors that detect different types of physical quantities. The first sensor 12a may detect any one of temperature, humidity, sound, ultrasonic waves, distortion, atmospheric pressure, illuminance, GPS signals, BLE beacons, submersion degree, and wind power. Further, the second sensor 12b may detect a physical quantity of a type different from that by the first sensor 12a among the plurality of types of physical quantities.

The first sensor 12a and the second sensor 12b are arranged on the main unit side of the speed reducer 100, in other words, on the casing 104 side and detect the condition related to the casing. For example, the first sensor 12a may be a vibration sensor that detects the vibration of the casing 104 of the speed reducer 100. The second sensor 12b may be a temperature sensor that detects the temperature of the casing 104 of the speed reducer 100. The power storage unit 24 may be a capacitor (including an electric double layer capacitor). A transparent antenna 60 may be used as an energy harvesting unit 22 that generates electricity based on Wi-Fi radio waves.

The processing unit 14 may derive the condition of the casing 104 based on a detection signal output from the first sensor 12a and a detection signal output from the second sensor 12b and further estimate the condition of the speed reduction mechanism 102 from the condition of the casing 104. For example, the processing unit 14 may derive the vibration and temperature of the casing 104 based on a detection signal output from the vibration sensor and a detection signal output from the temperature sensor and further estimate the vibration and temperature of the speed reduction mechanism 102 from the vibration and temperature of the casing 104. The processing unit 14 may generate output information obtained by aggregating the estimation results in chronological order and display the output information on the output unit 16 arranged on the outer surface side (for example, the front surface side of the nomenclature plate).

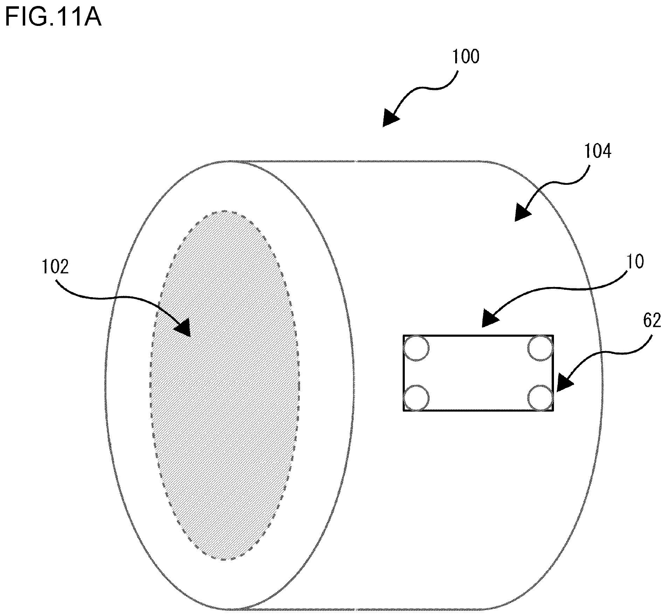

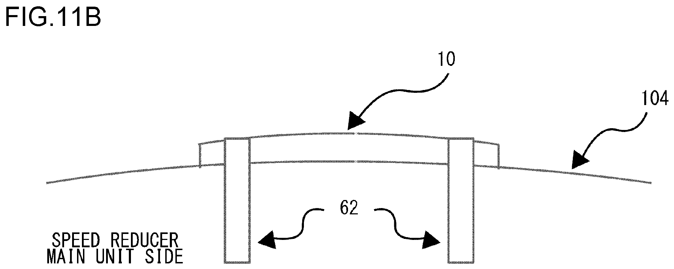

FIG. 11A and FIG. 11B show a second attachment example of a sensor device 10 to a speed reducer 100. The sensor device 10 in the figures includes a fastening part 62, and the sensor device 10 is fixed to the surface of the casing 104 by inserting the fastening part 62 into the casing 104. The fastening part 62 may be a screw, a pin, or a rivet and may be, for example, a metal screw. The housing of the sensor device 10 is desirably made of a flexible material (for example, a thin metal plate or the like) so as to be in close contact with the casing 104.

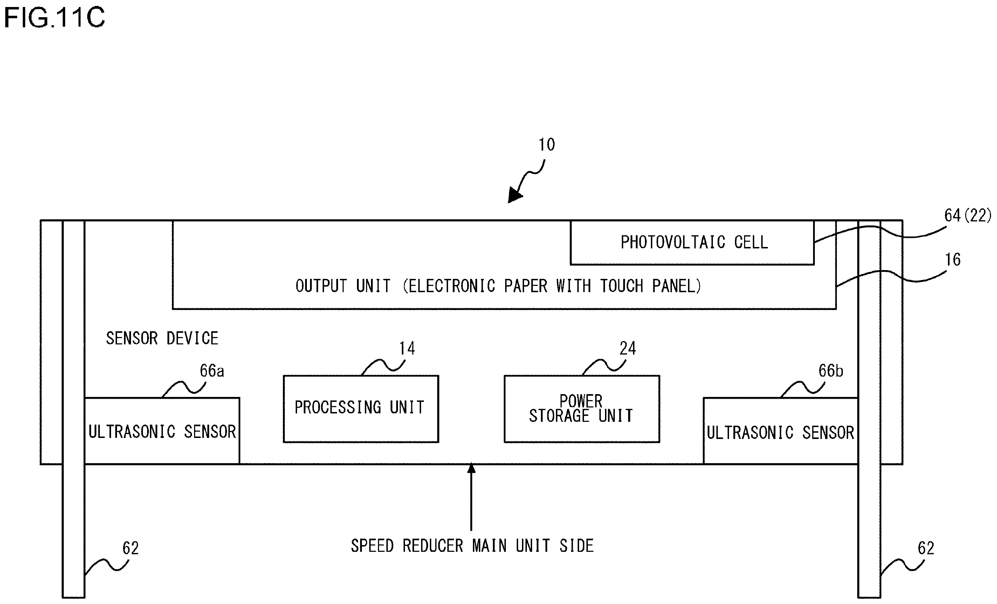

FIG. 11C shows an example of functional blocks of the sensor device 10 of FIG. 11A and FIG. 11B. The sensor device 10 includes an ultrasonic sensor 66a and an ultrasonic sensor 66b as a plurality of sensors. The ultrasonic sensor 66a and the ultrasonic sensor 66b are connected to the fastening part 62, in other words, are arranged so as to be in contact with the fastening part 62. Thereby, the fastening part 62 also functions as a probe for accurately detecting the condition inside the main unit of the speed reducer 100. In this way, by providing a plurality of sensors (the ultrasonic sensor 66a and the ultrasonic sensor 66b in this case) that detect the same type of physical quantity at positions away from each other, it is possible to estimate the location where an abnormality has occurred by using triangulation.

A plurality of ultrasonic sensors may be used instead of the plurality of ultrasonic sensors. Further, a strain gauge may be used along with the ultrasonic sensors or instead of the ultrasonic sensors. By arranging the sensor device 10 on the curved surface of the casing 104, the amount of strain is increased, and the strain inside the main unit of the speed reducer 100 can be detected with high accuracy.

The power storage unit 24 may be a capacitor (including an electric double layer capacitor). A photovoltaic cell 64 (in other words, a solar cell) may be used as an energy harvesting unit 22 that generates electric power based on light from lighting or the like. The processing unit 14 may use the principle of triangulation based on a detection signal output from the ultrasonic sensor 66a and a detection signal output from the ultrasonic sensor 66b so as to generate output information that indicates the location of an abnormality inside the main unit of the speed reducer 100.

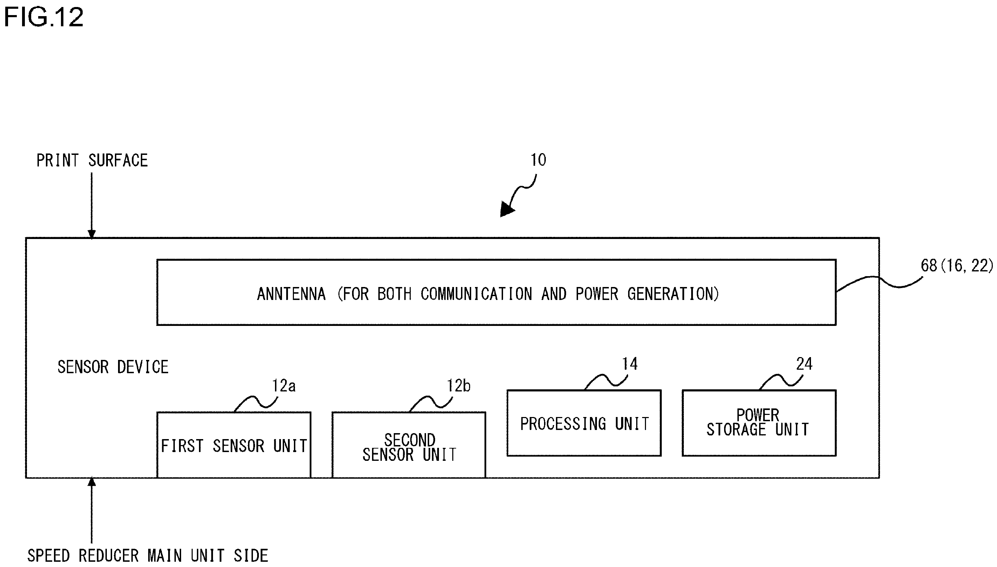

FIG. 12 shows another example of functional blocks of the sensor device 10 of FIG. 10A and FIG. 10B. Differences from the sensor device 10 of FIG. 10C will be described here. The sensor device 10 in this figure includes an antenna 68 (that is, a communication unit) instead of electronic paper (that is, a display unit) as an output unit 16. The output unit 16 transmits a signal including output information generated by the processing unit 14 to an external device. Further, as an energy harvesting unit 22, the antenna 68 also has a function of generating electricity by Wi-Fi radio waves or NFC and supplying electric power to each unit. A print surface of the sensor device 10 is a surface that can be visually recognized from the outside. Items to be listed on a nomenclature plate are printed on the print surface, and for example, the manufacturer name, the speed reducer model number, the date of manufacture, and the like are printed.

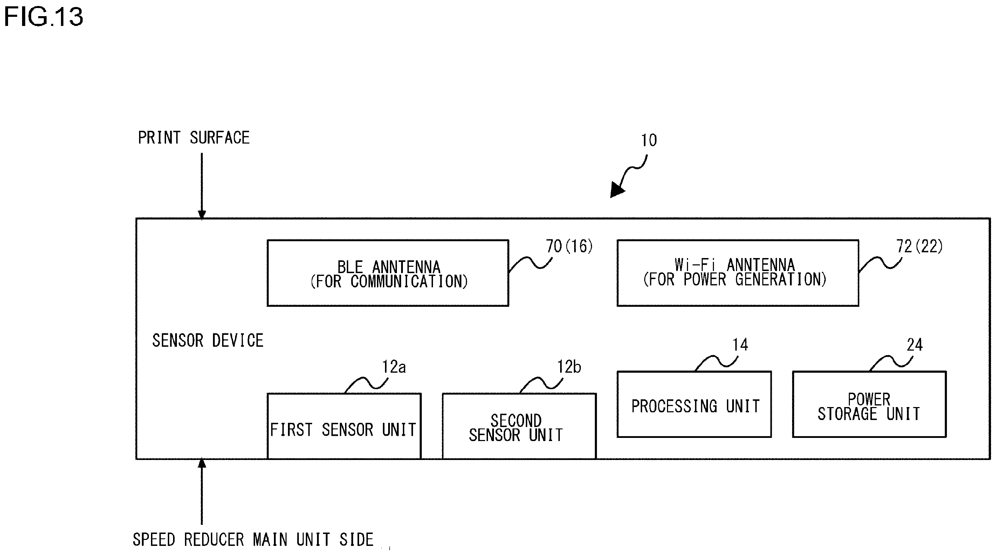

FIG. 13 also shows another example of the functional blocks of the sensor device 10 of FIG. 10A and FIG. 10B. The sensor device 10 in the figure is different from the sensor device 10 in FIG. 12 in that the sensor device 10 in the figure includes a plurality of types of antennas. A Wi-Fi antenna 72 generates electricity based on Wi-Fi radio waves as an energy harvesting unit 22. On the other hand, a BLE antenna 70 communicates with an external device as an output unit 16. By generating electric power using Wi-Fi with relatively large reception power, and transmitting and receiving electricity using a power-saving BLE, the efficiency of power generation and power consumption can be improved.

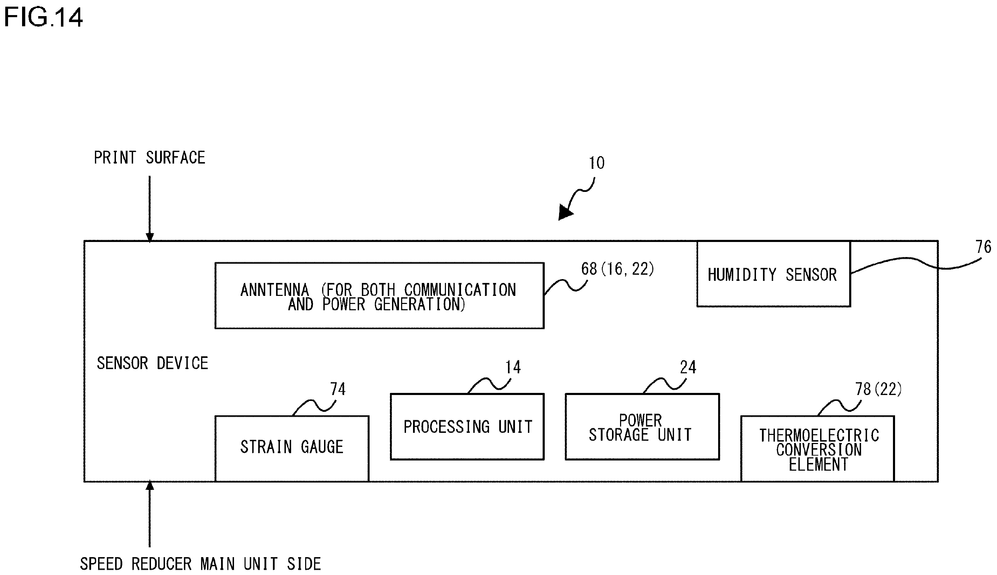

FIG. 14 also shows another example of the functional blocks of the sensor device 10 of FIG. 10A and FIG. 10B. In the same way as in the sensor device 10 of FIG. 12, the antenna 68 functions not only as a communication unit but also as a first power generation unit. A thermoelectric conversion element 78 is an element that converts heat energy conducted from the inside of the speed reducer 100 into electric energy by utilizing the Seebeck effect, the Pertier effect, or the Thomson effect and functions as a second power generation unit. A humidity sensor 76 is provided on the outer surface side (that is, the print surface side) of the sensor device 10 and detects the humidity around the speed reducer 100.

A strain gauge 74 dynamically measures the deformation of the main unit of the speed reducer 100 (casing 104). Therefore, at least a portion of the housing of the sensor device 10 where the strain gauge is arranged is desirably made of a stretchable material (can be also considered as a stretchable material, for example, a resin film or the like). Further, as shown in FIG. 10B, the sensor device 10 of FIG. 14 is fixed to the casing 104 of the speed reducer 100 by adhesion.

The strain gauge 74 also functions as a touch sensor for detecting stress generated by the touching or the like of the outer surface (print surface) of the sensor device 10 by the operator. When the strain gauge 74 detects a stress of a predetermined magnitude and direction, the processing unit 14 may determine that an output instruction for detection information has been input. The processing unit 14 may generate output information based on the humidity detected by the humidity sensor 76 and the strain detected by the strain gauge 74 and transmit the output information to an external device via the antenna 68.

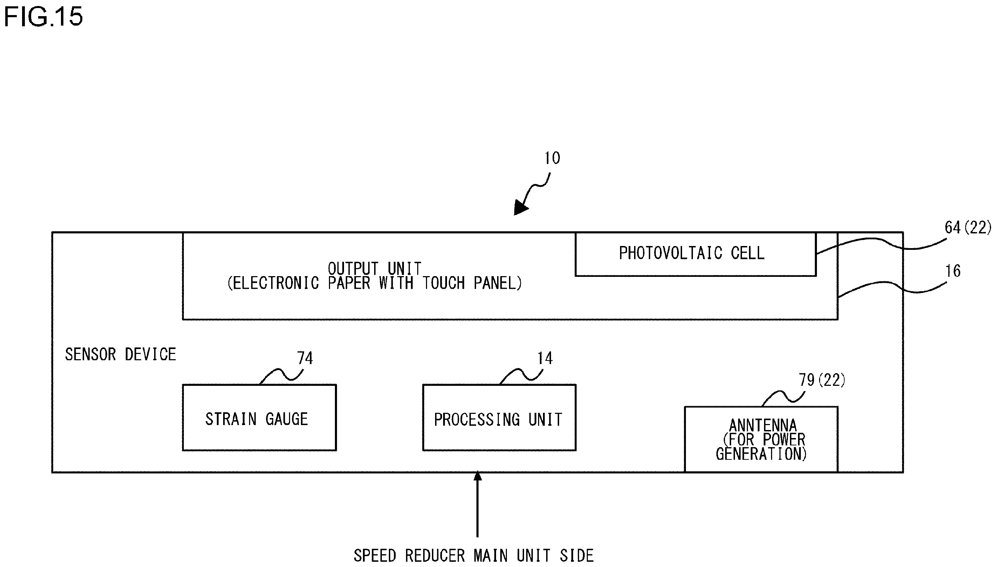

FIG. 15 also shows another example of the functional blocks of the sensor device 10 of FIG. 10A and FIG. 10B. The photovoltaic cell 64 converts light energy of lighting or the like into electrical energy as a first power generation unit. As a second power generation unit, the antenna 79 receives electromagnetic noise propagated from the main unit side of the speed reducer 100 so as to generate power. Temperature difference power generation may be performed by using the thermoelectric conversion element 78 instead of the antenna 79. As a secondary effect of providing the antenna 79, the sensor device 10 can be used as an electromagnetic shield since the antenna 79 absorbs electromagnetic noise.

As shown in FIGS. 14 and 15, by providing a plurality of power generation units of different methods, the required electric power can be easily fulfilled as a whole even when the power generation amount of one of the power generation units becomes insufficient. Further, since the sensor device 10 of FIG. 15 is not provided with the power storage unit 24 (capacitor or the like), the sensor device 10 can be miniaturized.

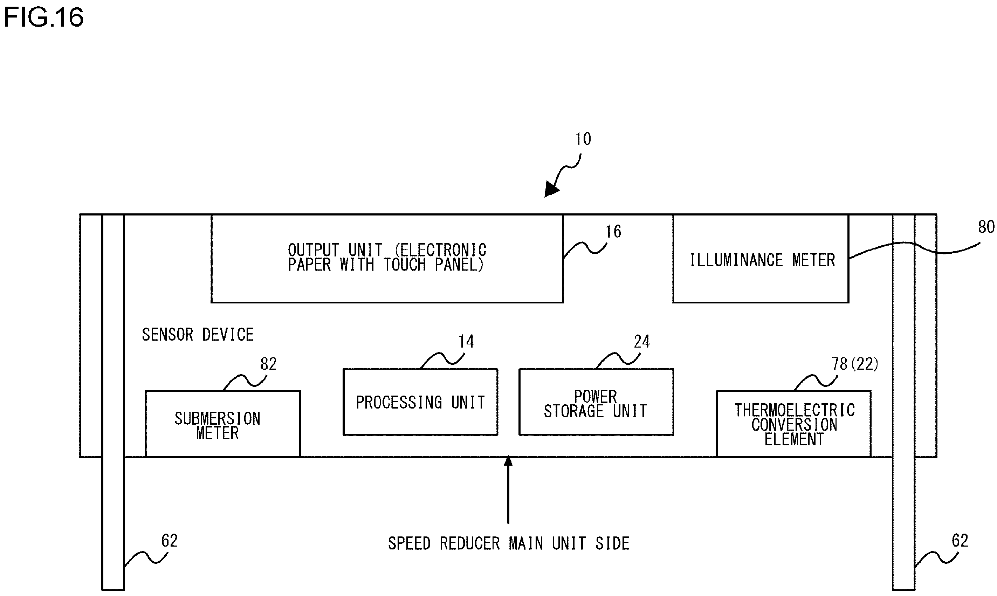

FIG. 16 shows another example of functional blocks of the sensor device 10 of FIG. 11A and FIG. 11B. A submersion meter 82 is a sensor that detects the degree of submersion (presence or absence of submersion). By providing the submersion meter 82, whether or not the main unit of the speed reducer 100 has been submerged can be checked. For example, when a plurality of speed reducers 100 are attached in a vertical direction to one robot, how high the robot has been submerged can be grasped by aggregating output information from the plurality of sensor devices 10 mounted on the plurality of speed reducers 100.

An illuminance meter 80 is provided on the outer surface (outside side) of the speed reducer 100 and detects the illuminance around the speed reducer 100. By including the illuminance around the speed reducer 100 based on the detection result from the illuminance meter 80 in the output information, whether or not a worker (inspection worker or the like) having a portable electric lamp has come nearby can be grasped. Further, whether or not the lighting near the speed reducer 100 is turned off can be grasped.

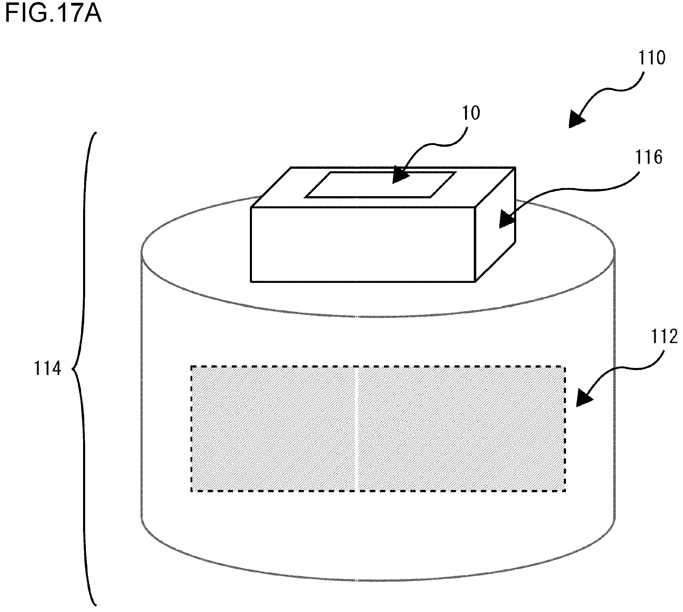

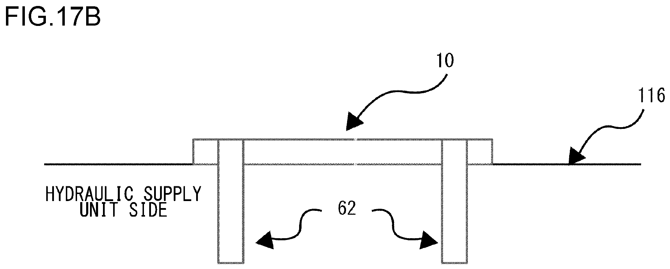

FIG. 17A and FIG. 17B show an attachment example of the sensor device 10 to a traveling unit 110 for a crawler. As shown in FIG. 17A, the traveling unit 110 for a crawler includes a traveling control unit 112 that controls the operation of the crawler, a casing 114 that houses the traveling control unit 112, and a sensor device 10. The casing 114 includes a hydraulic supply unit 116. As shown in FIG. 17B, the sensor device 10 includes a fastening part 62. The sensor device 10 is fixed to the surface of the casing 114 (the hydraulic supply unit 116 in this case) by inserting the fastening part 62 into the casing 114 (the hydraulic supply unit 116 in this case).

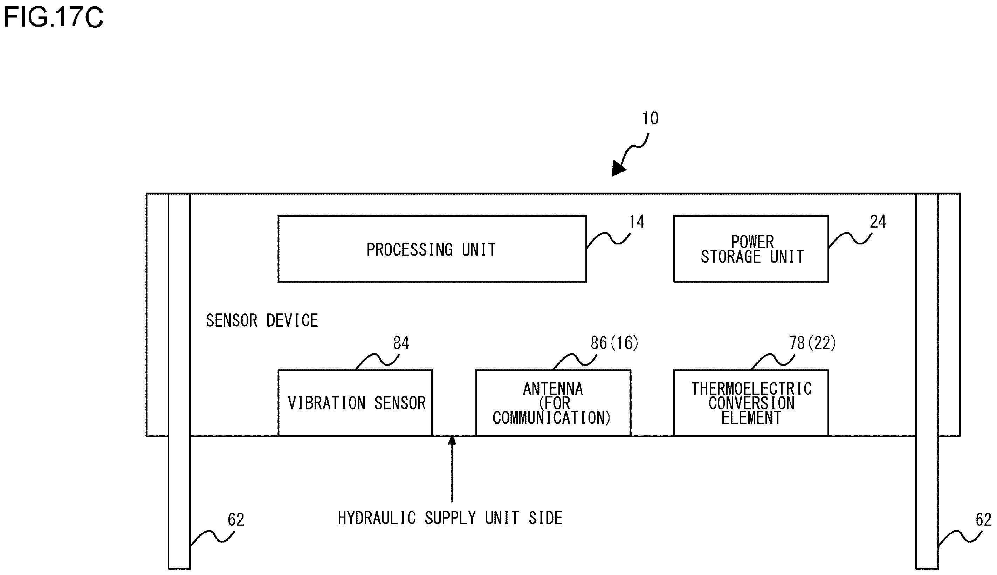

FIG. 17C shows an example of functional blocks of the sensor device 10 of FIG. 17A and FIG. 17B. The thermoelectric conversion element 78 generates electricity by utilizing the temperature of hydraulic oil as an energy harvesting unit 22. The power storage unit 24 is, for example, a capacitor. The antenna 86 functions as an output unit 16. The antenna 86 wirelessly communicates with an external device by using the housing (metal body) of the traveling unit 110 for a crawler as an antenna. As an exemplary variation, the sensor device 10 may communicate with an external device using known human body communication technology, handshake communication technology, or electric field communication technology.

The processing unit 14 may derive the vibration amount of the casing 114 (the hydraulic supply unit 116 in this case) based on the detection signal output from the vibration sensor 84 and further estimate from the vibration amount the vibration amount of the traveling control unit 112 or the crawler. The processing unit 14 may transmit the estimation result from the antenna 86 to the external device.

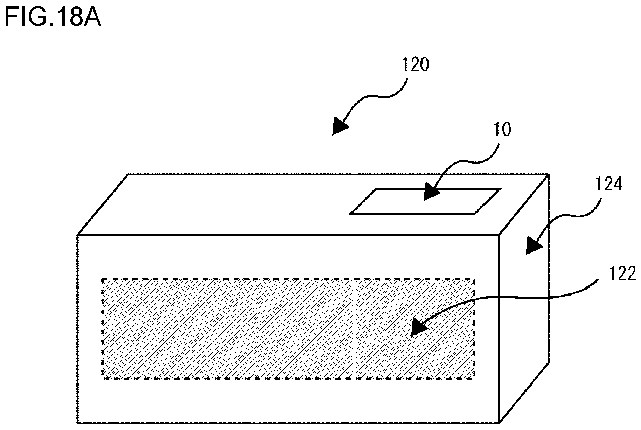

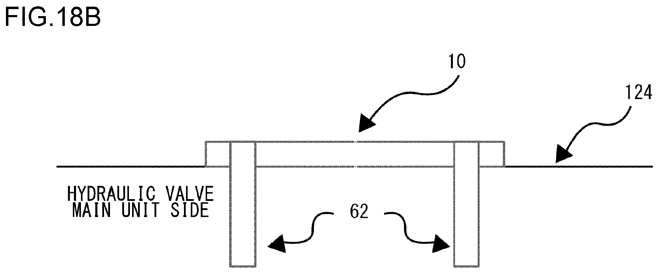

FIG. 18A and FIG. 18B show an attachment example of the sensor device 10 to a hydraulic valve 120. As shown in FIG. 18A, the hydraulic valve 120 includes a valve unit 122 that controls the flow of hydraulic oil (mineral oil or the like), a casing 124 that houses the valve unit 122, and a sensor device 10. As shown in FIG. 18B, the sensor device 10 includes a fastening part 62. The sensor device 10 is fixed to the surface of the casing 124 by inserting the fastening part 62 into the casing 124.

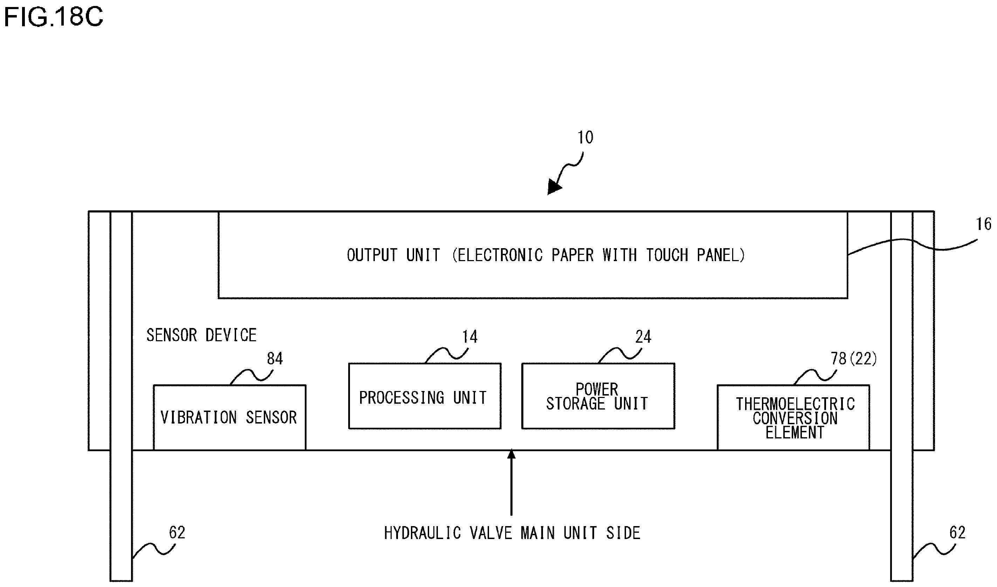

FIG. 18C shows an example of functional blocks of the sensor device 10 of FIG. 18A and FIG. 18B. The thermoelectric conversion element 78 generates electricity by utilizing the temperature of hydraulic oil as an energy harvesting unit 22. The power storage unit 24 is, for example, a capacitor. The sensor device 10 in this example includes electronic paper with a touch panel as an output unit 16. As in the case of the sensor device 10 of FIG. 17C, the housing (metal body) of the hydraulic valve 120 may be used as an antenna.

The processing unit 14 may derive the vibration amount of the casing 124 based on the detection signal output from the vibration sensor 84 and further estimate from the vibration amount the vibration amount of the valve unit 122. The processing unit 14 may display the estimation result on the electronic paper of the output unit 16. Needless to say, the sensor device 10 may be attached not only to the hydraulic valve 120 but also to various types of fluid valves (pneumatic valve, water pressure valve, etc.).

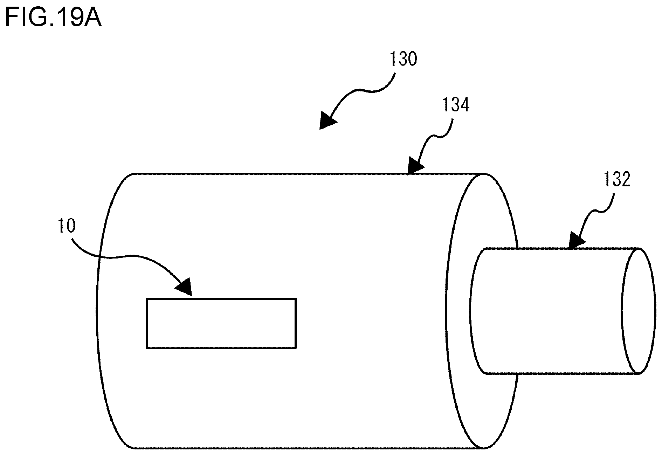

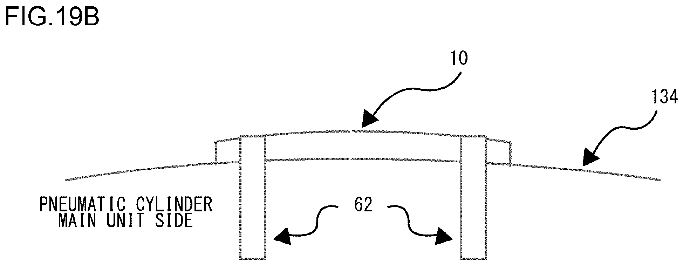

FIG. 19A and FIG. 19B show an attachment example of the sensor device 10 to a pneumatic cylinder 130. As shown in FIG. 19A, the pneumatic cylinder 130 includes a cylinder unit 132 for accommodating air, a casing 134 for accommodating the cylinder unit 132, and a sensor device 10. As shown in FIG. 19B, the sensor device 10 includes a fastening part 62. The sensor device 10 is fixed to the surface of the casing 134 by inserting the fastening part 62 into the casing 134.

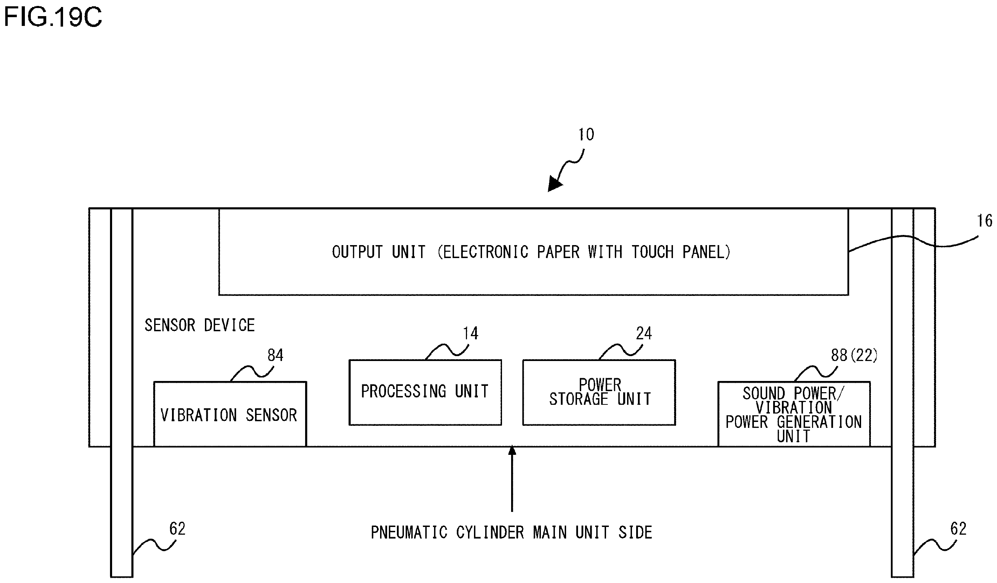

FIG. 19C shows an example of functional blocks of the sensor device 10 of FIG. 19A and FIG. 19B. As an energy harvesting unit 22, a sound power/vibration power generation unit 88 converts the energy of the exhaust sound or vibration of compressed air in the cylinder unit 132 into electrical energy. The power storage unit 24 is a secondary battery such as a lithium ion battery, a solid lithium ion battery, or an air battery in this case. The sensor device 10 in this example includes electronic paper with a touch panel as an output unit 16. As in the case of the sensor device 10 of FIG. 17C, the housing (metal body) of the pneumatic cylinder 130 may be used as an antenna.

The processing unit 14 may derive the vibration amount of the casing 134 based on the detection signal output from the vibration sensor 84 and further estimate from the vibration amount the vibration amount of the cylinder unit 132. The processing unit 14 may display the estimation result on the electronic paper of the output unit 16. Needless to say, the sensor device 10 may be attached not only to the pneumatic cylinder 130 but also to various types of fluid cylinders (hydraulic cylinder, water pressure cylinder, mechanical cylinder, etc.).

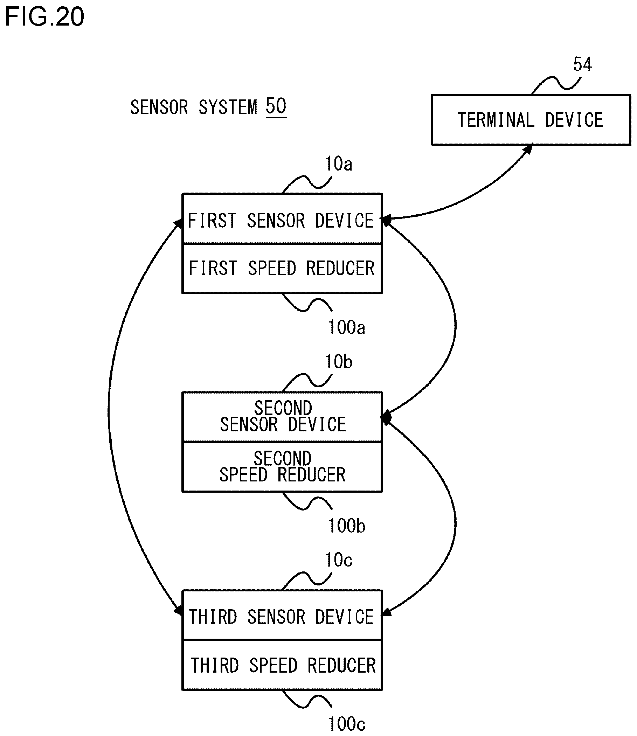

Next, an example of a sensor system including a plurality of sensor devices 10 will be described. FIG. 20 shows an example of cooperation (in other words, collaboration) of the plurality of sensor devices 10. In the example in FIG. 20, one sensor device 10 is attached to one speed reducer. More specifically, a first sensor device 10a is attached to a first speed reducer 100a, a second sensor device 10b is attached to a second speed reducer 100b, and a third sensor device 10c is attached to a third speed reducer 100c. The respective output units 16 of the first sensor device 10a, the second sensor device 10b, and the third sensor device 10c include a communication unit that uses Wi-Fi or the like. The first sensor device 10a, the second sensor device 10b, and the third sensor device 10c are formed to be communicable with one another.

For example, when the communication unit of the first sensor device 10a receives an information provision request from the terminal device 54, the communication unit may transmit the information provision request to the second sensor device 10b and the third sensor device 10c. The communication unit of the second sensor device 10b may transmit output information (for example, temperature information of the second speed reducer 100b) generated by the processing unit 14 to the first sensor device 10a. The communication unit of the third sensor device 10c may transmit output information (for example, temperature information of the third speed reducer 100c) generated by the processing unit 14 to the first sensor device 10a. The communication unit of the first sensor device 10a may transmit output information generated by the own device (for example, temperature information of the first speed reducer 100a), output information transmitted from the second sensor device 10b, and output information transmitted from the third sensor device 10c collectively to the terminal device 54. According to this aspect, if the terminal device 54 makes a request to one sensor device 10, the terminal device 54 can acquire a plurality of pieces of output information indicating conditions related to the plurality of speed reducers 100 generated by the plurality of sensor devices 10.

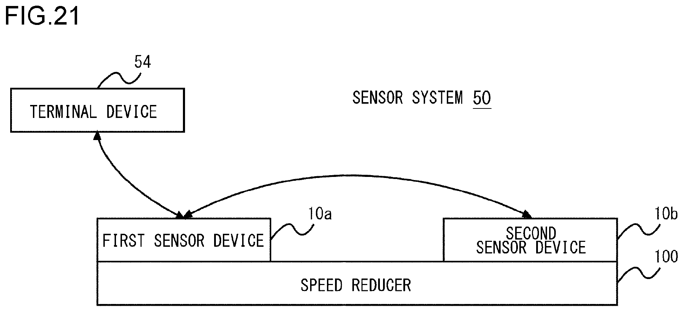

FIG. 21 also shows an example of cooperation of a plurality of sensor devices 10. In the example of FIG. 21, a plurality of sensor devices 10 (in this example, the first sensor device 10a and the second sensor device 10b) are attached to one speed reducer 100. The output unit 16 of the first sensor device 10a and the output unit 16 of the second sensor device 10b include a communication unit that uses Wi-Fi or the like. The first sensor device 10a and the second sensor device 10b are formed to be communicable with each other.

For example, when the communication unit of the first sensor device 10a receives an information provision request from the terminal device 54, the communication unit may transmit the information provision request to the second sensor device 10b. The communication unit of the second sensor device 10b may transmit output information (for example, temperature information and/or vibration information of the second portion of the speed reducer 100) generated by the processing unit 14 to the first sensor device 10a. The communication unit of the first sensor device 10a may transmit the output information generated by the own device (for example, the temperature information and/or vibration information of the first portion of the speed reducer 100) and the output information transmitted from the second sensor device 10b collectively to the terminal device 54. According to this aspect, if terminal device 54 makes a request to one sensor device 10, the terminal device 54 can acquire a plurality of pieces of output information indicating conditions related to a plurality of locations of one speed reducer 100 generated by the plurality of sensor devices 10. For example, according to the vibration amount detected at a plurality of locations of one speed reducer 100, the terminal device 54 can identify abnormal locations in the speed reducer 100 by using the principle of triangulation.

Described above is an explanation made based on an exemplary embodiment. The exemplary embodiment is intended to be illustrative only, and it will be obvious to those skilled in the art that various modifications to constituting elements and processes described in the exemplary embodiment could be developed and that such modifications are also within the scope of the present invention.

An exemplary variation will be described. A sensor device 10 can be attached to various articles not mentioned in the above exemplary embodiment. For example, the sensor device 10 may be attached as a nomenclature plate of a fluid pump (hydraulic pump, water pressure pump, air pump, etc.). This fluid pump may include a pump unit that controls the flow of fluid, a casing that houses the pump unit, and a sensor device 10. The sensor device 10 may be attached to the casing. The sensor device 10 may estimate the condition related to the pump unit (for example, temperature, vibration, etc.) by detecting the condition related to the casing and output output information indicating the estimation result to the outside.

Further, for example, the sensor device 10 may be attached as a nomenclature plate of a fluid compressor (air compressor, gas compressor, etc.). This fluid compressor may include a compression unit that applies pressure to the fluid, a casing that houses the compression unit, and a sensor device 10. The sensor device 10 may be attached to the casing. The sensor device 10 may estimate the condition related to the compression unit (for example, temperature, vibration, etc.) by detecting the condition related to the casing and output output information indicating the estimation result to the outside.

Further, for example, the sensor device 10 may be attached as a nomenclature plate of an electric motor. The electric motor may include a motor unit that converts electrical energy into mechanical energy, a casing that houses the motor unit, and a sensor device 10. The sensor device 10 may be attached to the casing. The sensor device 10 may estimate the condition related to the motor unit (for example, temperature, vibration, etc.) by detecting the condition related to the casing and output output information indicating the estimation result to the outside.

Further, for example, the sensor device 10 may be attached as a nomenclature plate of an electric actuator. This electric actuator may include a drive unit that converts electrical energy into mechanical energy, a casing that houses the drive unit, and a sensor device 10. The sensor device 10 may be attached to the casing. The sensor device 10 may estimate the condition related to the drive unit (for example, temperature, vibration, etc.) by detecting the condition related to the casing and output output information indicating the estimation result to the outside.

Further, for example, the sensor device 10 may be attached as a nomenclature plate of furniture, in other words, furniture to which the sensor device 10 is attached may be realized. The sensor device 10 may be attached to the housing (outer surface) of the furniture. The sensor device 10 may detect the condition related to the furniture (the housing of the furniture) and output output information indicating the detection result to the outside.

Further, for example, the sensor device 10 may be attached as a nomenclature plate of a tray used for the delivery of an article, in other words, a tray to which the sensor device 10 is attached may be realized. By detecting the condition related to the tray, the sensor device 10 may estimate the condition related to the article being delivered in the tray and output output information indicating the estimation result to the outside.

Further, for example, the sensor device 10 may be attached to the packaging material of the article, in other words, the packaging material to which the sensor device 10 is attached may be realized. The sensor device 10 may be attached to the outer surface of the packaging material. By detecting the condition related to the packaging material, the sensor device 10 may estimate the condition related to the article packaged by the packaging material and output output information indicating the estimation result to the outside.

Further, for example, the sensor device 10 may be attached as a nomenclature plate of tableware, in other words, the tableware to which the sensor device 10 is attached may be realized. The sensor device 10 may detect the condition related to the tableware and output output information indicating the detection result to the outside.

Further, for example, the sensor device 10 may be attached as a nomenclature plate of a home electric appliance, in other words, a home electric appliance to which the sensor device 10 is attached may be realized. The sensor device 10 may be attached to the housing (outer surface) of a home electric appliance. The sensor device 10 may estimate the condition related to the device portion (for example, temperature, vibration, etc.) by detecting the condition related to the housing of the home electric appliance and output output information indicating the detection result to the outside.

The sensor device 10 may be attached as a nomenclature plate to various constructions having predetermined physical structures. In this case, the sensor unit 12 of the sensor device 10 measures various conditions related to the physical structure of a construction. The construction may be the furniture, the tray, the packaging material, the tableware, or the household appliance described above, as well as building materials, automobile parts, railroad vehicle parts, aircraft parts, ship parts, industrial robot parts, or construction machine parts.

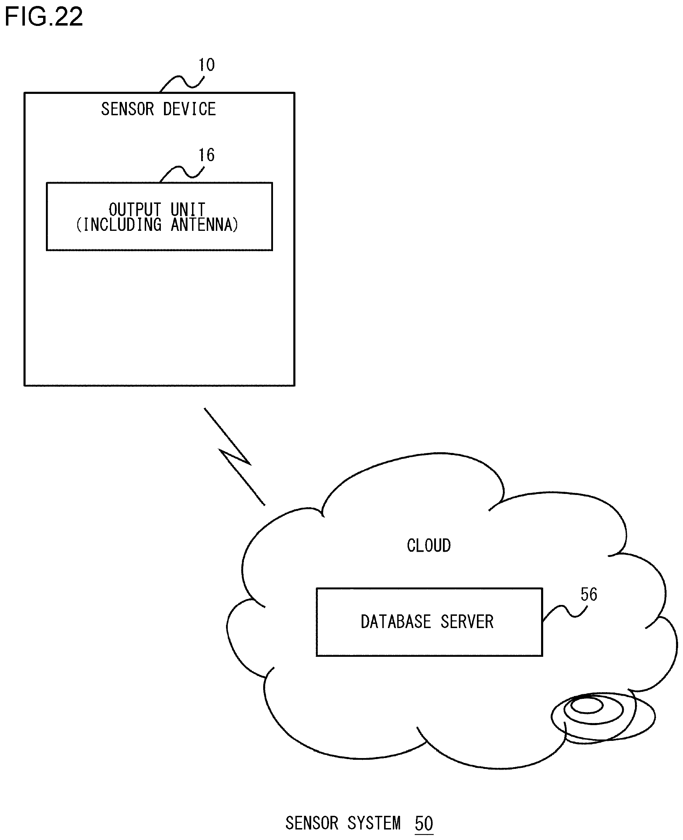

Another exemplary variation will be described. The sensor device 10 according to the present exemplary variation may include an output unit 16 (communication unit) capable of long-distance wireless communication with a wireless base station installed in a remote location. FIG. 22 corresponds to FIG. 3 and shows the configuration of a sensor system 50 including a sensor device 10 according to the exemplary variation. In the sensor system 50 according to the exemplary variation, the sensor device 10 directly transmits/receives data to/from a device on the cloud via a wireless base station installed in a remote location. For example, the sensor device 10 may directly transmit output information generated by the own device to a database server 56 on the cloud and store the output information in the database server 56.

Yet another exemplary variation will be described. Elements (hardware and software) for enhancing security are desirably mounted on at least one of the sensor device 10 and a part or the like (hereinafter, also referred to as "mother device") to which the sensor device 10 is attached. The security implementation may include, for example, password authentication and communication by public key cryptosystem.

An example of the security implementation will be described.
(1) Communication (wireless or wired) between the mother device and the sensor device 10 (nomenclature plate) has a possibility of having low security strength.
   Therefore, a hole may be made in the attachment surface (nomenclature plate attachment surface) of the sensor device 10 in the mother device, and the sensor device 10 may be arranged in the hole. This makes it difficult for an external device to eavesdrop on the communication between the mother device and the sensor device 10. As described, the reduction of the possibility of leakage of communication between the mother device and the sensor device 10 by the devising of the hardware allows for the operation of communication between the mother device and the sensor device 10 with low security.
(2) High security is required for communication (wireless) between the sensor device 10 and an external base station (cloud).

Since wireless communication systems such as 4G and 5G are so-called closed networks, no problem occurs. On the other hand, in the case of Wi-Fi or the like, at least password authentication is desirably implemented, and more preferably, communication by a public key cryptosystem is implemented.

Yet another exemplary variation will be described. The mother device and the sensor device 10 may be connected by wire, the mother device may supply electric power to the sensor device 10, and the sensor device 10 may monitor the normality of the power source in the mother device based on the electric power (voltage) supplied from the mother device. When predetermined electric power (voltage) from the mother device is not supplied, the sensor device 10 may detect that and store output information indicating a power source abnormality of the mother device or output the output information to the outside. The mother device may supply electric power for operating the sensor device 10. When electric power is not supplied from the mother device, the sensor device 10 may be operated by electric power provided from the energy harvesting unit 22 or the power storage unit 24.

### <Second Exemplary Embodiment>

The technology described in the above Patent Literature 1 (Japanese Patent Application Publication No. 2000-220508) is for acquiring the characteristic values of a product by using an inspection device at the time of manufacturing the product and does not allow for the acquisition of the situation during the transportation of the product. Therefore, if the characteristics of the product change from those at the time of manufacture due to transportation condition, it may be difficult to properly control the product.

Therefore, in the second exemplary embodiment, a nomenclature plate attached to the surface of a product (mechanical components, parts, and the like) is used as a sensor device as in the case of the first exemplary embodiment. The sensor device (nomenclature plate) in the exemplary embodiment uses the electric power generated by the sensor device itself so as to detect the condition related to a product during the transportation or storage of the product, in other words, the condition related to the product after the manufacturing of the product and before the actual use. Then, information based on the detection result is output to the outside.

More specifically, as in the case of the sensor device in the first exemplary embodiment, the sensor device in the second exemplary embodiment includes (1) a sensor unit that measures the condition of an attached mechanical component and the condition of the surrounding environment of the mechanical component, (2) an output unit that outputs information based on a measurement result from the sensor unit, and (3) an energy harvesting unit that self-generates electricity for operating the sensor unit and the output unit using Wi-Fi (registered trademark) radio waves, etc. This eliminates the need to secure a location for the sensor to be placed inside the mechanical component and to provide new wiring for supplying electric power to the sensor. In other words, while making it possible to grasp the condition related to machine component, it is possible to suppress an increase in the cost and period of time required for manufacturing the machine component.

Further, as an example of utilizing the sensor device proposed in the first exemplary embodiment, an information processing system is proposed that manages the characteristic values and control parameters of a product to which the sensor device is attached through the cooperation of the sensor device and an external device in the second exemplary embodiment. Hereinafter, elements that are the same as or correspond to those elements (functional blocks, etc.) described in the first exemplary embodiment shall be denoted by the same reference numerals. Repetitive description of features already described in the first exemplary embodiment will be omitted as appropriate.

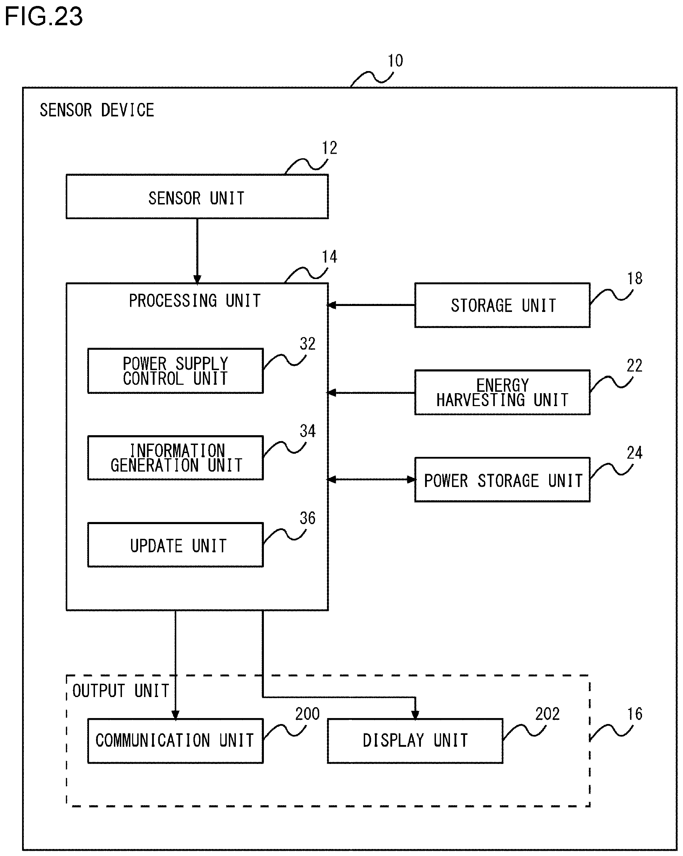

FIG. 23 is a block diagram showing functional blocks of a sensor device 10 according to the second exemplary embodiment. The figure shows an example of functional blocks included in the sensor device 10 according to the second exemplary embodiment. The sensor device 10 includes a sensor unit 12, a processing unit 14, a storage unit 18, an energy harvesting unit 22, a power storage unit 24, a communication unit 200, and a display unit 202. The configuration of the sensor device 10 shown in FIG. 23 is an example, and various configurations of the sensor device 10 described in the first exemplary embodiment can be applied.

The sensor device 10 according to the second exemplary embodiment is also attached to the surface of an article (hereinafter, also referred to as an "object") having a predetermined physical structure as a nomenclature plate. As in the case of the first exemplary embodiment, members corresponding to the functional blocks shown in FIG. 23 are integrally provided in a sheet shape also in the sensor device 10 according to the second exemplary embodiment. Thereby, the size of the sensor device 10 can be reduced, allowing for easy attachment of the sensor device 10 to an object as a nomenclature plate. Further, as in the case of the first exemplary embodiment, at least two of the members corresponding to the functional blocks shown in FIG. 23 are arranged in an overlapping manner also in the sensor device 10 according to the second exemplary embodiment. For example, in the sensor device 10 according to the second exemplary embodiment, at least two of the sensor unit 12, the communication unit 200, the storage unit 18, the power storage unit 24, and the energy harvesting unit 22 are arranged in an overlapping manner. Thereby, the size of the sensor device 10 can be reduced, allowing the sensor device 10 to be easily attached to an object as a nomenclature plate. As an exemplary variation, the sensor device 10 may be configured such that at least two of the sensor unit 12, the communication unit 200, the storage unit 18, the power storage unit 24, the energy harvesting unit 22, the processing unit 14, and the display unit 202 are arranged in an overlapping manner.

The sensor unit 12 measures the condition related to the object to which the sensor device 10 is attached. The processing unit 14 generates information output from the communication unit 200 (also referred to as "output information") based on the measurement result from the sensor unit 12 or generates output information displayed on the display unit 202. The processing unit 14 may output the output information that is based on the measurement result from the sensor unit 12 to the outside via the communication unit 200 or the display unit 202. Further, the processing unit 14 may store time-series output information that is based on measurement results at a plurality of points of time from the sensor unit 12 in the storage unit 18.

The processing unit 14 is operated by electric power supplied from the energy harvesting unit 22 or electric power supplied from the power storage unit 24. Further, the processing unit 14 includes a power supply control unit 32 that controls the power supply to each unit as in the case of the first exemplary embodiment. The storage unit 18 stores the measurement result from the sensor unit 12 and the information output from the communication unit 200 (or the display unit 202).

The energy harvesting unit 22 generates electric power based on the energy of the external environment such as temperature, humidity, radio waves of Wi-Fi or the like, electromagnetic noise from the surroundings, vibration, sound, light, wind, etc., and supplies the electric power to each unit (for example, at least one of the sensor unit 12, the storage unit 18, and the communication unit 200). In the second exemplary embodiment, the energy harvesting unit 22 charges the power storage unit 24 with the generated electricity.

The power storage unit 24 stores the electricity generated by the energy harvesting unit 22 and supplies the electric power (stored electric power) as electric power for operating each unit (for example, at least one of the sensor unit 12, the storage unit 18, and the communication unit 200). The power storage unit 24 may be a capacitor (including an electric double layer capacitor), a primary battery of every kind, or a secondary battery of every kind.

The communication unit 200 and the display unit 202 correspond to the output unit 16 according to the first exemplary embodiment. The communication unit 200 performs known wired communication or known wireless communication with an external device. In the case of wired communication, serial communication of every kind may be used. In the case of wireless communication, BLE, Wi-Fi, low-power radio, specific power saving wireless or 5th generation mobile communication system (5G) may be used. The communication unit 200 outputs output information (for example, output information stored in the storage unit 18) that is based on the measurement result from the sensor unit 12 in response to a request from an external device. The communication unit 200 may spontaneously output the output information based on a specific operation on the sensor device 10 or a physical quantity (for example, a vibration amount) that can be measured by the sensor device 10, regardless of a request from an external device.

The display unit 202 includes an electronic paper and a touch panel in the second exemplary embodiment. As an exemplary variation, the display unit 202 may use another display means such as a liquid crystal display. In normal times, the display unit 202 displays information (product name, manufacturer, serial number, etc.) about the object to be indicated on a nomenclature plate and displays the measurement result from the sensor unit 12 and the output information stored in the storage unit 18 when a predetermined operation is input to the touch panel.

The processing unit 14 and the display unit 202 in FIG. 23 are not essential in the sensor device 10 according to the second exemplary embodiment. For example, when the measurement result from the sensor unit 12 is output from the communication unit 200 without processing the measurement result, the processing unit 14 may be omitted. Further, if it is not necessary to display information that is based on the measurement result from the sensor unit 12 on the surface of the sensor device 10 (a surface that can be visually recognized by an inspector or the like), the display unit 202 may be omitted.

As a typical example of the sensor device 10 according to the second exemplary embodiment, the sensor device 10 may include a sensor unit 12, a communication unit 200, a processing unit 14 (including a power supply control unit 32), a storage unit 18, an energy harvesting unit 22, and a power storage unit 24 out of the functional blocks shown in FIG. 23. The storage unit 18 has a capacity capable of storing a plurality of measurement results from the sensor unit 12 and a plurality of pieces of information output from the communication unit 200. The storage unit 18 stores the plurality of measurement results or the plurality of pieces of information in association with a value that changes over time.

The sensor unit 12 has a first sensor group composed of a plurality of sensors that measure different types of physical quantities and a second sensor group composed of a plurality of sensors that are arranged apart from one another and that measure the same type of physical quantity. The first sensor group may include, for example, a strain gauge 74 and a humidity sensor 76 as described in relation to FIG. 14. The second sensor group may include, for example, an ultrasonic sensor 66a and an ultrasonic sensor 66b as described in relation to FIG. 11C. The processing unit 14 calculates the physical phenomenon inside the object based on the measurement result from the second sensor group and stores the calculation result in the storage unit 18. For example, the processing unit 14 may estimate the position inside the object in which the abnormality has occurred by using triangulation based on the detection result from each sensor included in the second sensor group.

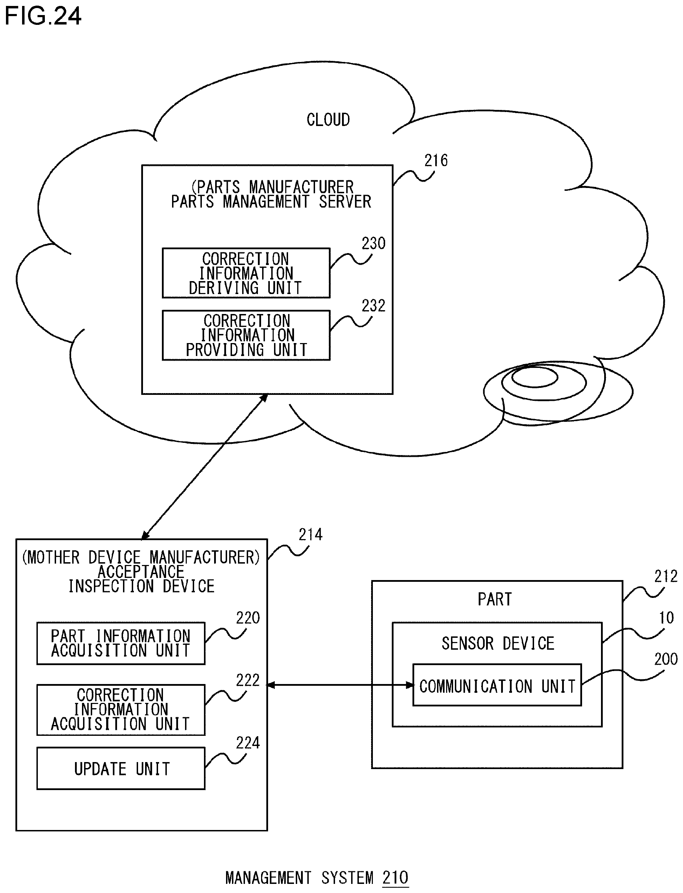

FIG. 24 shows the configuration of a management system 210 including the sensor device 10 according to FIG. 23. The management system 210 includes a part 212, an acceptance inspection device 214, and a parts management server 216. The management system 210 is an information processing system that manages or adjusts the characteristic values of the part 212. These devices communicate by a known method and exchange data with one another.

The sensor device 10 is attached as a nomenclature plate of the part 212, and various types of information to be written on the nomenclature plate is displayed on the surface (surface visible from the outside) thereof. As described in the first exemplary embodiment, the sensor device 10 can be attached to various articles, products, and mechanical components. For example, the part 212 may be the speed reducer, the traveling unit for a crawler, the fluid valve, the fluid cylinder, the fluid pump, the fluid compressor, the electric motor, or the electric actuator exemplified in the first exemplary embodiment. For example, when the part 212 is the speed reducer (in other words, when the sensor device 10 is attached to the speed reducer), the management system 210 of the speed reducer is realized. Further, the mode of attaching the sensor device 10 to these parts 212 and the functional block of the sensor device 10 may be the same as those in the first exemplary embodiment.

The communication unit 200 of the sensor device 10 transmits output information that is based on the measurement result from the sensor unit 12 to the acceptance inspection device 214. Further, the communication unit 200 receives information (correction information in the second exemplary embodiment) transmitted from the acceptance inspection device 214.

The storage unit 18 of the sensor device 10 stores the measurement result from the sensor unit 12 and the information (correction information in the second exemplary embodiment) received by the communication unit 200 from the acceptance inspection device 214. Further, the part ID and the characteristic value of the part 212 are stored in the storage unit 18 of the sensor device 10 at the time of manufacturing or shipping the part 212. The part ID is the ID of the part 212 to which the sensor device 10 is attached. The characteristic value of the part 212 is data referred to when the part 212 is put into operation and may be, for example, a control parameter suitable for the condition or property of the part 212 at the time of shipping inspection.

The acceptance inspection device 214 is an information processing device of a mother device manufacturer that manufactures a device (also referred to as a "mother device") in which the part 212 is incorporated. The acceptance inspection device 214 inspects whether or not the quality of the part 212 meets a predetermined standard. The acceptance inspection device 214 includes a part information acquisition unit 220, a correction information acquisition unit 222, and an update unit 224. The part information acquisition unit 220 acquires information (referred to as "part information") related to the part 212 transmitted from the sensor device 10 attached to the part 212. The part information includes the part ID, the characteristic value stored in advance in the storage unit 18 of the sensor device 10, and detection information (corresponding to the above output information) based on the detection result from the sensor unit 12 of the sensor device 10.

The correction information acquisition unit 222 transmits the part information acquired by the part information acquisition unit 220 to the parts management server 216. The correction information acquisition unit 222 acquires correction information (typically including a correction value for the characteristic value) for the characteristic value of the part 212 transmitted from the parts management server 216. The update unit 224 transmits the correction information acquired by the correction information acquisition unit 222 to the sensor device 10 so as to thereby store the correction value included in the correction information in the storage unit 18 of the sensor device 10.

The parts management server 216 is an information processing device of a parts manufacturer that manufactured the part 212. The parts management server 216 manages information related to the part 212 (conditions of the part and the environment, an initial characteristic value, a correction value, etc.). The parts management server 216 includes a correction information deriving unit 230 and a correction information providing unit 232. The correction information deriving unit 230 derives correction information (typically including a correction value for the characteristic value) related to the characteristics of the part 212 based on the part information transmitted from the acceptance inspection device 214. The correction information providing unit 232 transmits the correction information derived by the correction information deriving unit 230 to the acceptance inspection device 214.

For example, the correction information deriving unit 230 may identify the existing characteristic value of the part 212 based on the part information and may identify the condition (temperature, vibration, etc.) related to the part 212 based on the part information. Further, the correction information deriving unit 230 may identify a correction value derivation algorithm, a parameter, or the like predetermined for the part 212 based on the part ID indicated by the part information. The correction information deriving unit 230 may derive a correction value so as to offset the influence of the condition related to the part 212 on the characteristic value of the part 212 in accordance with the identified algorithm, parameter, or the like. Further, the correction information deriving unit 230 may derive a new characteristic value of the part 212 as the correction value.

The correction information deriving unit 230 determines whether or not the condition related to the part 212 indicated by the part information deviates from a predetermined correctable range and determines that the correction value is not applicable if the condition related to the part 212 deviates from the correctable range (or falls in an abnormal range). The above normal range may be defined as a normal range of the temperature inside or outside the part 212 or may be defined as a normal range of the amount of vibration generated in the part 212. When it is determined that the correction value cannot be applicable, the correction information deriving unit 230 generates correction information indicating that the correction is impossible.

The operation of the management system 210 will be described with reference to FIG. 24.
(1) The part information acquisition unit 220 of the acceptance inspection device 214 transmits a request for transmitting part information to the sensor device 10.
(2) The communication unit 200 of the sensor device 10 transmits the part information generated by the processing unit 14 based on data stored in the storage unit 18 to the acceptance inspection device 214.
(3) The correction information acquisition unit 222 of the acceptance inspection device 214 transmits a request for transmitting correction information to the parts management server 216.
   This transmission request includes the part information acquired from the part 212.
(4) The correction information deriving unit 230 of the parts management server 216 generates correction information based on the part information transmitted from the acceptance inspection device 214. The correction information providing unit 232 transmits the correction information to the acceptance inspection device 214.
(5) The update unit 224 of the acceptance inspection device 214 transmits the correction information transmitted from the parts management server 216 to the sensor device 10.
(6) The communication unit 200 of the sensor device 10 acquires the correction information transmitted from the acceptance inspection device 214, and the processing unit 14 (update unit 36) stores a correction value indicated by the correction information in the storage unit 18.

In this way, according to the management system 210, the correction value according to the condition (vibration, temperature, etc.) related to the part 212 during transportation or storage is stored in the part 212. Thereby, the characteristic value (a control parameter, etc.) stored in advance in the part 212 can be corrected to a value in which the influence of the external environment is taken into account, allowing for the proper operation of the part 212 to be supported. Further, according to the configuration of the management system 210 shown in FIG. 24, the method of deriving the correction value, which is important for the manufacturer of the part, is not leaked to the manufacturer of the mother device, and the burden on the manufacturer of the mother device for setting a correction value for the part 212 can be minimized.

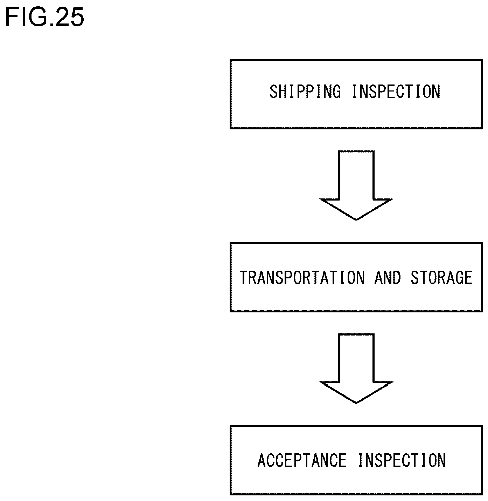

FIG. 25 shows the distribution process of the part 212. After the shipping inspection of the part 212 is performed by the manufacturer of the part, the communication unit 200 of the sensor device 10 attached to the part 212 communicates with a device of the manufacturer of the part using the electricity generated by the energy harvesting unit 22. The processing unit 14 of the sensor device 10 acquires the characteristic value of the part 212 transmitted from the device of the manufacturer of the part via the communication unit 200 and stores the characteristic value in the storage unit 18. Further, during the shipping inspection or during a period before and after the shipping inspection, the power storage unit 24 of the sensor device 10 stores the electricity generated by the energy harvesting unit 22.

During transportation and storage of the part 212, the processing unit 14 (power supply control unit 32) of the sensor device 10 mainly supplies the electric power stored in the power storage unit 24 to the sensor unit 12 and the storage unit 18 on a regular basis. The processing unit 14 stores detection information (in other words, output information) that is based on the detection result from the sensor unit 12 in the storage unit 18. The flow of the sensing process during transportation and storage of the part 212 is the same as the flow in FIG. 4 described in the first exemplary embodiment.

When the part 212 arrives at the manufacturer of the mother device and the acceptance inspection is performed, the energy harvesting unit 22 of the sensor device 10 generates electric power based on illumination light, Wi-Fi radio wave, etc., at the manufacturer of the mother device, and the communication unit 200 of the sensor device 10 communicates with the acceptance inspection device 214 based on the electric power supplied from the energy harvesting unit 22. As described in relation to FIG. 24, the processing unit 14 of the sensor device 10 acquires the correction information provided from the parts management server 216 and corrects the characteristic value of the part 212 stored in the storage unit 18 based on the correction value indicated by the correction information. When the correction information indicates that the correction is impossible, the processing unit 14 of the sensor device 10 displays that the part 212 is abnormal or out of order on the display unit 202.

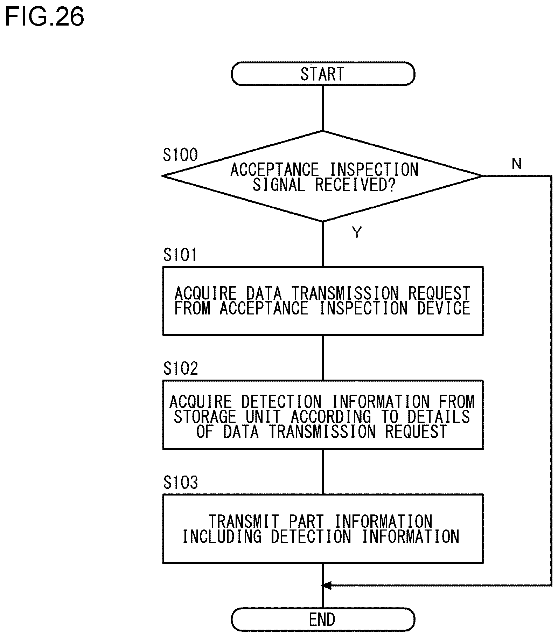

FIG. 26 is a flowchart showing an example of the process of the sensor device 10 at the time of acceptance inspection of the part 212. When the communication unit 200 of the sensor device 10 receives an acceptance inspection signal transmitted from the acceptance inspection device 214 (Y of S100), the processing unit 14 of the sensor device 10 acquires a data transmission request indicated by the acceptance inspection signal (S101). The processing unit 14 of the sensor device 10 acquires detection information (output information) stored in the storage unit 18 according to the details of the data transmission request and generates part information including the detection information (S102). The communication unit 200 of the sensor device 10 transmits the part information generated by the processing unit 14 to the acceptance inspection device 214 (S103). If the acceptance inspection signal has not been received (N in S100), processed in and after S101 are skipped. The sensor device 10 repeatedly executes the processes shown in the figure.

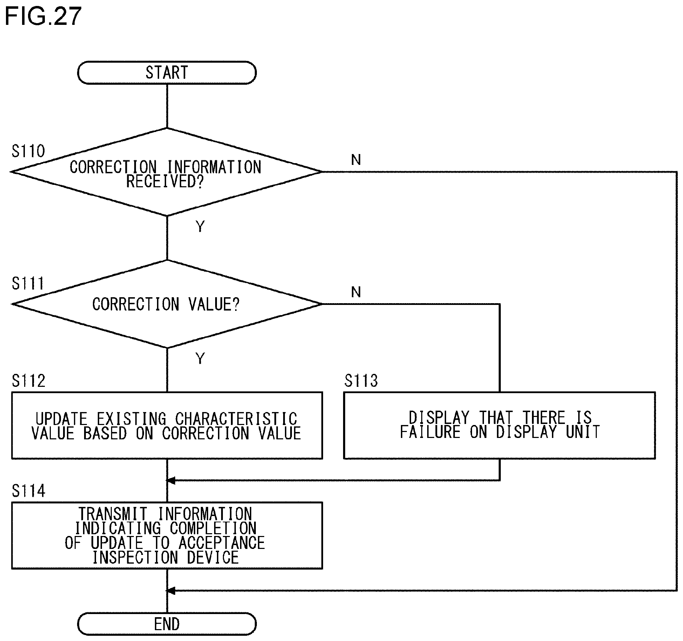

FIG. 27 is a flowchart showing an example of the process of the sensor device 10 at the time of acceptance inspection of the part 212. The figure shows processes that follow the processes in FIG. 26. When the communication unit 200 of the sensor device 10 receives correction information transmitted from the acceptance inspection device 214 (Y in S110), the processing unit 14 of the sensor device 10 determines whether the correction information includes a correction value (or a new characteristic value) or the correction information indicates that the correction is impossible. When the correction information includes the correction value (Y in S111), the processing unit 14 (update unit 36) of the sensor device 10 updates the characteristic value stored in advance in the storage unit 18 based on the correction value indicated by the correction information (S112). When the correction information indicates that the correction is impossible (N in S111), the processing unit 14 of the sensor device 10 displays that there is a failure (S113) on the display unit 202.

The processing unit 14 of the sensor device 10 transmits information indicating the completion of the update process based on the correction information to the acceptance inspection device 214 via the communication unit 200 (S114). If the correction information has not been received (N in S110), processes in and after S111 are skipped. The sensor device 10 repeatedly executes the processes shown in the figure.

An exemplary variation will be described. The processing unit 14 of the sensor device 10 autonomously determines whether or not the condition related to the part 212 indicated by the detection information deviates from a predetermined normal range and may determine that the part 212 is abnormal if the condition related to the part 212 deviates from the normal range. When the processing unit 14 of the sensor device 10 determines that the part 212 is abnormal, the processing unit 14 may display that there is an abnormality or failure on the display unit 202. The above normal range may be defined as a normal range of the internal or external temperature of the part 212 detected by the sensor unit 12 (temperature sensor) or may be defined as a normal range of the amount of vibration generated in the part 212 detected by the sensor unit 12 (vibration sensor).

Alternatively, the processing unit 14 of the sensor device 10 may autonomously determine that there is an abnormality when the condition related to the part 212 indicated by the detection information satisfies a predetermined abnormality condition and display that there is an abnormality or failure on the display unit 202. For example, the abnormality condition may be that the temperature inside or outside the part 212 detected by the sensor unit 12 (temperature sensor) is equal to or higher than a predetermined value or may be that the amount of vibration that has occurred in the part 212 detected by the sensor unit 12 (vibration sensor) is equal to or higher than a predetermined value.

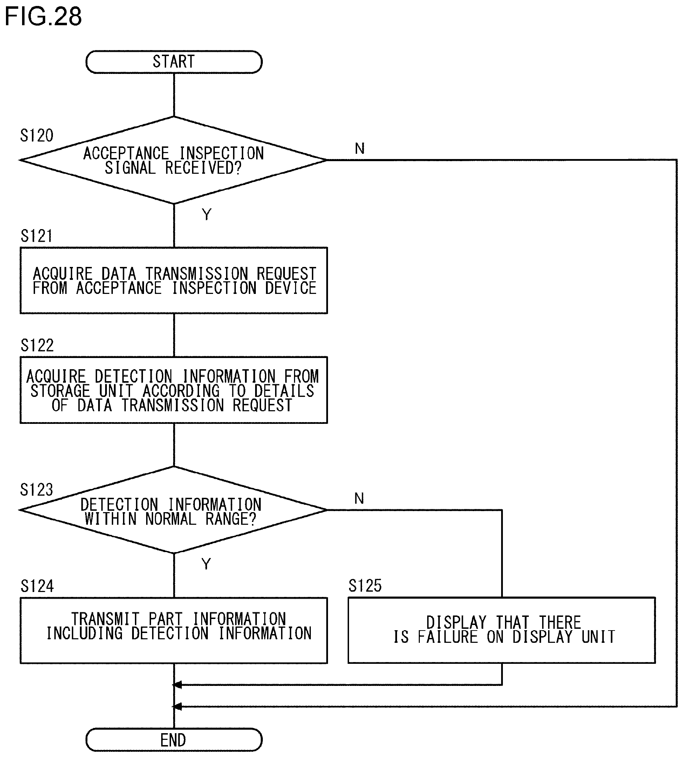

FIG. 28 is a flowchart showing an exemplary variation of the process of the sensor device 10 at the time of acceptance inspection of the part 212. Since the processes in S120, S121, and S122 in the figure are the same as the processes in S100, S101, and S102 in FIG. 26, the description thereof will be omitted. If the condition related to the part 212 indicated by the detection information is within the normal range (Y in S123), the processing unit 14 of the sensor device 10 transmits the part information including the detection information to the acceptance inspection device 214 (S124). If the condition related to the part 212 indicated by the detection information deviates from the normal range (N in S123), the processing unit 14 of the sensor device 10 displays that there is a failure on the display unit 202 (S125). Although not shown, the processing unit 14 may transmit the part information indicating that there is an abnormality or failure in the part 212 to the acceptance inspection device 214 along with the process in S125.

Described above is an explanation on the present invention based on the second exemplary embodiment. The second exemplary embodiment is intended to be illustrative only, and it will be obvious to those skilled in the art that various modifications to constituting elements and processes described in the second exemplary embodiment could be developed and that such modifications are also within the scope of the present invention.

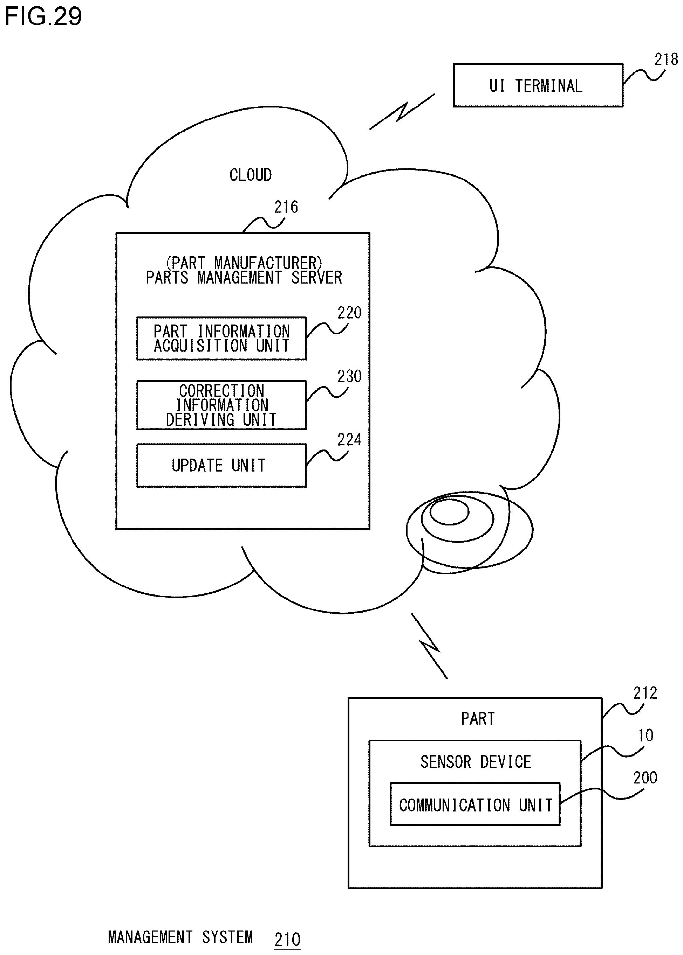

An exemplary variation will be described. A sensor device 10 according to the present exemplary variation may include a communication unit 200 capable of long-distance communication with a wireless base station installed in a remote location. FIG. 29 corresponds to FIG. 24 and shows the configuration of a management system 210 including the sensor device 10 according to the present exemplary variation. In the management system 210 according to the exemplary variation, the sensor device 10 directly transmits/receives data to/from a device on the cloud via a wireless base station installed in a remote location. For example, the sensor device 10 may transmit the output information generated by the own device to a parts management server 216 on the cloud and receive correction information transmitted from the parts management server 216.

The parts management server 216 according to the present exemplary variation includes the function of the acceptance inspection device 214 according to the second exemplary embodiment and may include, for example, a part information acquisition unit 220, a correction information deriving unit 230, and an update unit 224. Further, the parts management server 216 may include a storage unit (not shown) for accumulating output information uploaded from a plurality of sensor devices 10 attached to a plurality of parts 212. The parts management server 216 may provide a screen (user interface) for displaying output information uploaded from the plurality of sensor devices 10 to a UI terminal 218 (PC, tablet terminal, etc.) provided in the factory of the manufacturer of the parts or the like. Thereby, parts management can be effectively supported.

The security implementation configuration and the configuration for monitoring the power supply of the mother device described above as the exemplary variation of the first exemplary embodiment are also useful as an exemplary variation of the second exemplary embodiment.

Optional combinations of the aforementioned exemplary embodiments and exemplary variations will also be within the scope of the present invention. New embodiments resulting from the combinations have combined effects of the exemplary embodiments and exemplary variations that are combined. It will be obvious to those skilled in the art that the function to be achieved by each constituent requirement described in the claims are achieved by each constituting element shown in the exemplary embodiments and in the exemplary variations or by a combination of the constituting elements.

### [INDUSTRIAL APPLICABILITY]

The present invention can be applied to the device or system that comprises a sensor.

### [REFERENCE SIGNS LIST]

10 sensor device, 12 sensor unit, 14 processing unit, 16 output unit, 18 storage unit, 22 energy harvesting unit, 24 power storage unit, 32 power supply control unit, 34 information generation unit, 36 update unit, 50 sensor system, 62 fastening part.

## Claims

1. A sensor device (10) comprising:
a sensor unit (12) adapted to measure a condition related to an object;
a communication unit (200) adapted to output information that is based on the measurement result from the sensor unit (12);
a storage unit (18) adapted to store the measurement result from the sensor unit (12) and the information output from the communication unit (200);
a power storage unit (24) adapted to supply electric power for operating at least one of the sensor unit (12), the communication unit (200), and the storage unit (18); and
a power generation unit (22) adapted to convert energy that exists in an external environment into electric power and charges the power storage unit (24), wherein at least two of the sensor unit (12), the communication unit (200), the storage unit (18), the power storage unit (24), and the power generation unit (22) are arranged in an overlapping manner;
**characterized in that** the sensor device (10) further comprises a fastening part (62) for fixing the sensor device (10) to the object, the fastening part (62) being inserted into the object; wherein
the sensor unit (12), the communication unit (200), the storage unit (18), the power storage unit (24), and the power generation unit (22) are integrally provided; and the sensor unit (12) is adapted to measure a state inside the object by using the fastening part (62) as a probe.

2. The sensor device (10) according to claim 1, wherein
the storage unit (18) is capable of storing a plurality of measurement results from the sensor unit (12) or a plurality of pieces of information output from the communication unit (200), and
the storage unit (18) is adapted to store the plurality of measurement results or the plurality of pieces of information in association with a value that changes over time.

3. The sensor device (10) according to claim 1 or 2, further comprising:
a power supply control unit (32) adapted to control the supply or disconnection of electric power for at least one of the sensor unit (12), the communication unit (200), and the storage unit (18).

4. The sensor device (10) according to any one of claims 1 through 3, wherein
the power generation unit (22) has a plurality of power generation means.

5. The sensor device (10) according to any one of claims 1 through 4, wherein
the sensor unit (12) has a plurality of sensors that measure different types of physical quantities.

6. The sensor device (10) according to any one of claims 1 through 5, further comprising:
a processing unit (14) adapted to generate information output from the communication unit (200) based on the measurement result from the sensor unit (12).

7. The sensor device (10) according to claim 6, wherein
the processing unit (14) has arithmetic capacity that increases as the number of operation clocks increases and is capable of changing the number of operation clocks according to processing details.

8. The sensor device (10) according to claim 6 or 7, wherein
the sensor unit (12) includes a plurality of sensors that are arranged apart from one another and has a plurality of sensors that measure the same type of physical quantity, and
the processing unit (14) is adapted to calculate the physical phenomenon inside the object based on the measurement result from the plurality of sensors and stores the calculation result in the storage unit (18).

9. The sensor device (10) according to any one of claims 1 through 8, further comprising:
a display unit (202) that includes electronic paper.

10. A method performed by a sensor device (10), comprising:
detecting performed by measuring a condition related to an object;
outputting information that is based on the measurement result in the detecting;
storing the measurement result and the information in a storage unit (18);
supplying electric power from a power storage unit (24) as electric power for executing at least one of the respective processes of the detecting, the outputting, and the storing; and
converting energy that exists in an external environment into electric power and charging the power storage unit (24);
**characterized in that**
the sensor device (10) includes a fastening part (62) for fixing the sensor device (10) to the object, the fastening part (62) being inserted into the object; and
the detecting includes measuring a state inside the object by using the fastening part (62) as a probe.

11. The method according to claim 10 performed by the sensor device (10), further comprising:
deleting data stored in the storage unit (18) when a predetermined instruction is input.

## Patentansprüche

1. Sensorvorrichtung (10), umfassend:
eine Sensoreinheit (12), angepasst zum Messen eines Zustands in Bezug auf ein Objekt;
eine Kommunikationseinheit (200), angepasst zum Ausgeben von Informationen, die auf dem Messergebnis von der Sensoreinheit (12) basieren;
eine Speichereinheit (18), angepasst zum Speichern des Messergebnisses von der Sensoreinheit (12) und der von der Kommunikationseinheit (200) ausgegebenen Informationen;
eine Stromspeichereinheit (24), angepasst zum Zuführen von elektrischem Strom für den Betrieb von wenigstens einem Element der Gruppe umfassend die Sensoreinheit (12), die Kommunikationseinheit (200) und die Speichereinheit (18); und
eine Stromerzeugungseinheit (22), angepasst zum Umwandeln von Energie, die in einer externen Umgebung vorhanden ist, in elektrischen Strom und Laden der Stromspeichereinheit (24), wobei wenigstens zwei Elemente der Gruppe umfassend die Sensoreinheit (12), die Kommunikationseinheit (200), die Speichereinheit (18), die Stromspeichereinheit (24) und die Stromerzeugungseinheit (22) überlappend angeordnet sind;
**dadurch gekennzeichnet, dass** die Sensorvorrichtung (10) ferner umfasst
ein Befestigungsteil (62) zum Befestigen der Sensorvorrichtung (10) am Objekt, wobei das Befestigungsteil (62) in das Objekt eingeführt wird; wobei
die Sensoreinheit (12), die Kommunikationseinheit (200), die Speichereinheit (18), die Stromspeichereinheit (24) und die Stromerzeugungseinheit (22) integriert angeordnet sind; und
die Sensoreinheit (12) zum Messen eines Zustands innerhalb des Objekts unter Verwendung des Befestigungsteils (62) als Sonde angepasst ist.

2. Sensorvorrichtung (10) nach Anspruch 1, wobei
die Speichereinheit (18) in der Lage ist, eine Vielzahl von Messergebnissen von der Sensoreinheit (12) oder eine Vielzahl von von der Kommunikationseinheit (200) ausgegebenen Informationen zu speichern; und
die Speichereinheit (18) zum Speichern der Vielzahl von Messergebnissen oder der Vielzahl von Informationen in Verbindung mit einem sich im Laufe der Zeit ändernden Wert angepasst ist.

3. Sensorvorrichtung (10) nach Anspruch 1 oder 2, ferner umfassend:
eine Stromversorgungs-Steuereinheit (32), angepasst zum Steuern des Zuführens oder Trennens von elektrischem Strom für wenigstens ein Element der Gruppe umfassend die Sensoreinheit (12), die Kommunikationseinheit (200) und die Speichereinheit (18).

4. Sensorvorrichtung (10) nach einem der Ansprüche 1 bis 3, wobei
die Stromerzeugungseinheit (22) eine Vielzahl von Stromerzeugungsmitteln aufweist.

5. Sensorvorrichtung (10) nach einem der Ansprüche 1 bis 4, wobei
die Sensoreinheit (12) eine Vielzahl von Sensoren aufweist, die verschiedene Arten von physikalischen Größen messen.

6. Sensorvorrichtung (10) nach einem der Ansprüche 1 bis 5, ferner umfassend:
eine Verarbeitungseinheit (14), angepasst zum Erzeugen von von der Kommunikationseinheit (200) ausgegebenen Informationen auf der Basis des Messergebnisses von der Sensoreinheit (12).

7. Sensorvorrichtung (10) nach Anspruch 6, wobei
die Verarbeitungseinheit (14) eine Rechenkapazität aufweist, die mit der Zahl der Betriebstakte zunimmt, und in der Lage ist, die Zahl der Betriebstakte entsprechend den Verarbeitungsdetails zu ändern.

8. Sensorvorrichtung (10) nach Anspruch 6 oder 7, wobei
die Sensoreinheit (12) eine Vielzahl von Sensoren umfasst, die voneinander getrennt angeordnet sind, und eine Vielzahl von Sensoren aufweist, welche die gleiche Art von physikalischer Größe messen, und
die Verarbeitungseinheit (14) zum Berechnen des physikalischen Phänomens innerhalb des Objekts auf der Basis des Messergebnisses von der Vielzahl von Sensoren ausgebildet ist und das Berechnungsergebnis in der Speichereinheit (18) speichert.

9. Sensorvorrichtung (10) nach einem der Ansprüche 1 bis 8, ferner umfassend:
eine Anzeigeeinheit (202), die elektronisches Papier umfasst.

10. Von einer Sensorvorrichtung (10) ausgeführtes Verfahren, umfassend:
durch Messen eines Zustands in Bezug auf ein Objekt ausgeführtes Erfassen;
Ausgeben von Informationen, die auf dem Messergebnis beim Erfassen basieren;
Speichern des Messergebnisses und der Informationen in einer Speichereinheit (18);
Zuführen von elektrischem Strom von einer Stromspeichereinheit (24) als elektrischen Strom zum Ausführen von wenigstens einem der jeweiligen Prozesse zum Erfassen, des Ausgeben und Speichern; und
Umwandeln von Energie, die in einer externen Umgebung vorhanden ist, in elektrischen Strom und Laden der Stromspeichereinheit (24);
**dadurch gekennzeichnet, dass**
die Sensorvorrichtung (10) ein Befestigungsteil (62) zum Befestigen der Sensorvorrichtung (10) am Objekt umfasst, wobei das Befestigungsteil (62) in das Objekt eingeführt wird; und
das Erfassen das Messen eines Zustands innerhalb des Objekts unter Verwendung des Befestigungsteils (62) als Sonde umfasst.

11. Verfahren nach Anspruch 10, ausgeführt von der Sensorvorrichtung (10), ferner umfassend:
Löschen von in der Speichereinheit (18) gespeicherten Daten, wenn eine vorbestimmte Anweisung eingegeben wird.

## Revendications

1. Dispositif capteur (10), comprenant :
une unité de capteur (12) adaptée pour mesurer une condition relative à un objet ;
une unité de communication (200) adaptée pour délivrer en sortie des informations qui sont basées sur le résultat de mesure provenant de l'unité de capteur (12) ;
une unité de stockage (18) adaptée pour stocker le résultat de mesure provenant de l'unité de capteur (12) et les informations en sortie de l'unité de communication (200) ; une unité de stockage d'énergie (24) adaptée pour fournir de l'énergie électrique afin de faire fonctionner au moins une parmi l'unité de capteur (12), l'unité de communication (200) et l'unité de stockage (18) ; et une unité de production d'énergie (22) adaptée pour convertir l'énergie qui existe dans un environnement externe en énergie électrique et charger l'unité de stockage d'énergie (24), dans lequel au moins deux parmi l'unité de capteur (12), l'unité de communication (200), l'unité de stockage (18), l'unité de stockage d'énergie (24) et l'unité de production d'énergie (22) sont agencées de manière à se chevaucher ;
**caractérisé en ce que** le dispositif de capteur (10) comprend en outre
une partie de fixation (62) pour fixer le dispositif capteur (10) à l'objet, la partie de fixation (62) étant insérée dans l'objet ; dans lequel
l'unité de capteur (12), l'unité de communication (200), l'unité de stockage (18), l'unité de stockage d'énergie (24), et
l'unité de production d'énergie (22) sont fournies d'un seul tenant ; et
l'unité de capteur (12) est adaptée pour mesurer un état à l'intérieur de l'objet en utilisant la partie de fixation (62) comme une sonde.

2. Dispositif capteur (10) selon la revendication 1, dans lequel
l'unité de stockage (18) est capable de stocker une pluralité de résultats de mesure provenant de l'unité de capteur (12) ou une pluralité d'éléments d'informations en sortie de l'unité de communication (200), et
l'unité de stockage (18) est adaptée pour stocker la pluralité de résultats de mesure ou la pluralité d'éléments d'information en association avec une valeur qui change au fil du temps.

3. Dispositif capteur (10) selon la revendication 1 ou 2, comprenant en outre :
une unité de commande d'alimentation en énergie (32) adaptée pour commander l'alimentation ou la déconnexion d'énergie électrique pour au moins une parmi l'unité de capteur (12), l'unité de communication (200) et l'unité de stockage (18).

4. Dispositif capteur (10) selon l'une quelconque des revendications 1 à 3, dans lequel l'unité de production d'énergie (22) présente une pluralité de moyens de production d'énergie.

5. Dispositif capteur (10) selon l'une quelconque des revendications 1 à 4, dans lequel l'unité de capteur (12) présente une pluralité de capteurs qui mesurent différents types de quantités physiques.

6. Dispositif capteur (10) selon l'une quelconque des revendications 1 à 5, comprenant en outre :
une unité de traitement (14) adaptée pour générer des informations en sortie de l'unité de communication (200) sur la base du résultat de mesure provenant de l'unité de capteur (12).

7. Dispositif capteur (10) selon la revendication 6, dans lequel
l'unité de traitement (14) présente une capacité arithmétique qui augmente à mesure que le nombre d'horloges de fonctionnement augmente et est capable de changer le nombre d'horloges de fonctionnement en fonction de détails de traitement.

8. Dispositif capteur (10) selon la revendication 6 ou 7, dans lequel
l'unité de capteur (12) inclut une pluralité de capteurs qui sont agencés à distance les uns des autres et présente une pluralité de capteurs qui mesurent le même type de grandeur physique, et
l'unité de traitement (14) est adaptée pour calculer le phénomène physique à l'intérieur de l'objet sur la base du résultat de mesure provenant de la pluralité de capteurs, et stocke le résultat de calcul dans l'unité de stockage (18).

9. Dispositif capteur (10) selon l'une quelconque des revendications 1 à 8, comprenant en outre :
une unité d'affichage (202) qui inclut du papier électronique.

10. Procédé mis en œuvre par un dispositif capteur (10), comprenant les étapes consistant à :
détecter une mise en œuvre en mesurant une condition relative à un objet ;
délivrer en sortie des informations qui sont basées sur le résultat de mesure lors de la détection ;
stocker le résultat de mesure et les informations dans une unité de stockage (18) ;
fournir de l'énergie électrique à partir d'une unité de stockage d'énergie (24) en tant qu'énergie électrique pour exécuter au moins l'un des processus respectifs de détection, de délivrance en sortie et de stockage ; et
convertir de l'énergie qui existe dans un environnement externe en énergie électrique et charger l'unité de stockage d'énergie (24) ;
**caractérisé en ce que**
le dispositif capteur (10) inclut une partie de fixation (62) pour fixer le dispositif capteur (10) à l'objet, la partie de fixation (62) étant insérée dans l'objet ; et
la détection inclut la mesure d'un état à l'intérieur de l'objet en utilisant la partie de fixation (62) comme une sonde.

11. Procédé selon la revendication 10, mis en œuvre par le dispositif capteur (10), comprenant en outre l'étape consistant à :
supprimer des données stockées dans l'unité de stockage (18) lorsqu'une instruction prédéterminée est entrée.
